(19) Europäisches Patentamt
European Patent Office
Office européen des brevets

(11) **EP 4 761 379 A1**

(12) **EUROPEAN PATENT APPLICATION**
published in accordance with Art. 153(4) EPC

(43) Date of publication:
**17.06.2026 Bulletin 2026/25**

(21) Application number: **24853409.1**

(22) Date of filing: **03.07.2024**

(51) International Patent Classification (IPC):
***H04W 52/02*** (2009.01)

(52) Cooperative Patent Classification (CPC):
**H04L 5/00; H04W 24/02; H04W 52/02;** Y02D 30/70

(86) International application number:
**PCT/CN2024/103388**

(87) International publication number:
**WO 2025/035994 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 CN 202311014882**

(71) Applicant: **Datang Mobile Communications
Equipment Co., Ltd.
Beijing 100085 (CN)**

(72) Inventors:
• **LI, Yaomin
Beijing 100085 (CN)**
• **WANG, Jiaqing
Beijing 100085 (CN)**
• **YANG, Meiying
Beijing 100085 (CN)**

(74) Representative: **Ipsilon
12 Avenue d'Italie
75013 Paris (FR)**

(54) **METHOD FOR DETERMINING LOW POWER ACCESS OR TRANSMISSION, DEVICE AND STORAGE MEDIUM**

(57)     The embodiments of the present disclosure provide a method for determining low power access or transmission, a device and a storage medium. The method comprises: on the basis of first configuration information sent by a network device, determining a resource location at which a first device receives a first signal; and, on the basis of second configuration information sent by the network device and the resource location at which the first device receives the first signal, determining a resource location at which a second device receives a second signal.

Determine, based on first configuration information sent from a network device, a resource location for a first device to receive a first signal — 101

Determine, based on second configuration information sent from the network device and the resource location for the first device to receive the first signal, a resource location for the second device to receive a second signal — 102

FIG. 1

**Description**

CROSS-REFERENCES TO RELATED APPLICATIONS

The present application claims priority to Chinese patent application No. 202311014882.2 filed on August 11, 2023, entitled "Method for Determining Low Power Access or Transmission, Device and Storage Medium", which is hereby incorporated by reference in its entirety.

FIELD

The present application relates to the field of communications, and in particular, to methods and apparatuses for determining low power access or transmission, an electronic device, a network device, and a storage medium.

BACKGROUND

A concept of low power wake-up signal (LP-WUS) and low power wake-up receiver (LP-WUR) is proposed in an agenda item about terminal energy-saving, which is applied to further reduce the level of terminal energy consumption compared to traditional energy-saving solutions. In case that a terminal is in a radio resource control (RRC) idle mode, a main radio (MR) of the terminal with higher energy consumption is deactivated when there is no service transmission between a base station and the terminal, so as to allow the terminal to enter an ultra-deep sleep state; meanwhile, an LP-WUR device is activated to receive an LP-WUS sent from the base station to determine whether the MR needs to be woken up to communicate with the base station, which may greatly save power consumption of the terminal.

However, an access delay generated from the MR being woken up from the ultra-deep sleep state, to the MR being able to normally receive a new radio (NR) signal sent from the base station includes: a transition delay from the ultra-deep sleep state to an active state (400ms, 800ms), a resynchronization delay after the MR enters the active state (3~10 synchronization signal/physical broadcast channel block (SSB) periods), etc. Compared to traditional terminal energy-saving methods, the access delay when the terminal is woken up again after entering the ultra-deep sleep state is significantly increased.

Therefore, it has become an urgent problem to be solved in this field of how to reduce the delay of terminal when accessing the base station after entering the ultra-deep sleep state.

BRIEF SUMMARY

In response to the problems in the related art, embodiments of the present application provide methods and apparatuses for determining low power access or transmission, an electronic device, a network device, and a storage medium.

An embodiment of the present application provides a method for determining low power access or transmission, including:

determining, based on first configuration information sent from a network device, a resource location for a first device to receive a first signal, where the first signal is used to instruct the first device to wake up a second device; and
determining, based on second configuration information sent from the network device and the resource location for the first device to receive the first signal, a resource location for the second device to receive a second signal, where the second signal is used for the second device, after being woken up, to access the network device, or to perform a signal transmission or a data transmission with the network device.

In some embodiments, the first configuration information includes one or more of:

a time-domain location of the first signal;
a frequency-domain location or a frequency-domain synchronization raster of the first signal;
a symbol length occupied by the first signal;
a mapping way of the first signal in a time-frequency resource;
a count of repeated transmissions or a maximum count of transmissions of the first signal;
a number of second devices associated with the first signal;
a number of second device groups associated with the first signal; or
a number of resource locations of a second signal associated with the first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and the resource location for the second device to receive the second signal, where the resource location corresponding to the reference point is a resource location for the first device to receive a first one of the first signals or a resource location for the first device to receive a last one of the first signals;
first search space configuration information, used to configure a first period for receiving the second signal, a start reception location offset and a second duration within a single first period, and a type of the second signal;
second search space configuration information, used to configure a second period for receiving the second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive the second signal; or
a count or a maximum count of receptions of the second signal.

In some embodiments, the duration of the reception window is multiple unit durations determined in a unit of a system frame, a slot, a symbol, or a paging cycle.

In some embodiments, determining, based on the second configuration information sent from the network device and the resource location for the first device to receive the first signal, the resource location for the second device to receive the second signal includes:

determining, based on the start moment of the reception window configured in the reception window configuration information included in the second configuration information and the resource location corresponding to the reference point, a start resource location of the reception window;
determining, based on the start resource location of the reception window and the duration of the reception window, or based on the start resource location of the reception window and the end moment of the reception window configured in the reception window configuration information included in the second configuration information, an end resource location of the reception window; and
determining, based on the second search space configuration information included in the second configuration information, the resource location for the second device to receive the second signal between the start resource location of the reception window and the end resource location of the reception window.

In some embodiments, determining, based on the second configuration information sent from the network device and the resource location for the first device to receive the first signal, the resource location for the second device to receive the second signal includes:

determining, based on the first search space configuration information and/or the second search space configuration information included in the second configuration information, candidate resource locations for receiving the second signal;
among the candidate resource locations, determining, based on a first rule and a first input parameter, a paging frame where a start resource location for receiving the second signal is located as a target paging frame, where the first input parameter is one or more of a system frame where the resource location corresponding to the reference point is located, the paging cycle T, a number N of paging frames within the paging cycle, or the reference time-domain offset in the second configuration information;
in the target paging frame, determining, based on an index calculation rule and a second input parameter, an index value corresponding to a symbol location for receiving the second signal, where the second input parameter is one or more of an identifier of the second device, the number N of paging frames within the paging cycle, or a total number $N_s$

of paging occasions in a single paging frame; and

determining, based on a start reception symbol location set *firstPDCCH-MonitoringOccasionOfPO* configured in a first system information block (SIB1), a paging occasion matching the index value corresponding to the symbol location for receiving the second signal, and taking the paging occasion as the resource location for receiving the second signal.

In some embodiments, determining, based on the second configuration information sent from the network device and the resource location for the first device to receive the first signal, the resource location for the second device to receive the second signal includes:

determining, based on the first search space configuration information and/or the second search space configuration information included in the second configuration information, candidate resource locations for receiving the second signal;

among the candidate resource locations, determining, based on the resource location for the first device to receive the first signal and the reference time-domain offset in the second configuration information, a target paging frame for the second device to receive the second signal; and

in the target paging frame, sequentially determining, based on the second period in the second search space configuration information in the second configuration information, resource locations for receiving the second signal.

In some embodiments, the method further includes:

in case that the second configuration information sent from the network device further includes a fourth duration associated with the first signal for receiving the second signal, determining the resource location for the second device to receive the second signal based on the second configuration information; and

determining the resource location for the second device to receive the second signal based on the second configuration information includes:

obtaining the first period in the first search space configuration information in the second configuration information;

within each first period, sequentially determining, based on the reference time-domain offset in the second configuration information, the resource location for the second device to receive the second signal; and

determining, based on the fourth duration and the reference time-domain offset in the second configuration information and a resource location for receiving a target second signal, a resource location for the first device to receive at least one first signal;

where the fourth duration is an integer multiple of a discontinuous reception cycle or paging cycle for receiving the second signal.

In some embodiments, the method further includes:

receiving the first signal at the resource location for receiving the first signal; and

in case that the count of repeated transmissions or the maximum count of transmissions of the first signal included in the first configuration information is reached, no longer receiving the first signal.

In some embodiments, the method further includes:

receiving the second signal at the resource location for receiving the second signal; and

in case that the maximum count of receptions of the second signal included in the second configuration information is reached and the second signal is not received, the second device enters a sleep state.

In some embodiments, before determining, based on the first configuration information sent from the network device, the resource location for the first device to receive the first signal, the method further includes:

reporting reception capability information to the network device, where the reception capability information is used for the network device to determine the first configuration information and/or the second configuration information; and

the reception capability information includes one or more of:

a type of a receiver of the first device;

a sensitivity of a receiver of the first device;

a transition delay of the second device from an ultra-deep sleep state to an active state; or
version information of a communication standard that the second device supports.

In some embodiments, the first rule satisfies following formula:

$$(\text{LP-WUS\_SFN} + \text{LP-WUS\_offset} + \text{SFN}) \bmod T = T \text{ div } N,$$

where LP-WUS_SFN represents the system frame where the resource location corresponding to the reference point is located, LP-WUS_offset represents the reference time-domain offset, SFN represents the paging frame where the start resource location for receiving the second signal is located, mod() represents modulo, T represents a discontinuous reception cycle or the paging cycle, and N represents the number of paging frames within the paging cycle.

In some embodiments, the index calculation rule satisfies following formula:

$$\text{i\_s} = \text{floor } (\text{UE\_ID}/N) \bmod \text{Ns},$$

where UE_ID represents the identifier of the second device, N represents the number of paging frames within the paging cycle, floor() represents rounding down, mod() represents modulo, Ns is the total number of paging occasions in a single paging frame, and i_s represents the index value corresponding to the symbol location for receiving the second signal.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In some embodiments, the first configuration information and/or the second configuration information is activated by a dynamic signaling, or the first configuration information and/or the second configuration information is deactivated by a dynamic signaling.

In some embodiments, the second search space configuration information includes one or more of:

a period for receiving the second signal;
a start location offset for receiving the second signal;
a third duration for receiving the second signal;
a start reception symbol within a single period for receiving the second signal;
an aggregation level; or
a downlink control information format for determining the type of the second signal.

In some embodiments, the method further includes:

determining, based on the type of the second signal in the second configuration information and the resource location for receiving the second signal, a type of a received second signal, where the type of the second signal includes a paging occasion or a paging early indication;
determining, based on third configuration information sent from the network device, whether paging early indication configuration information is configured, where the paging early indication configuration information is used to indicate a type of the second signal that the second device preferentially receives; and
in case that the paging early indication configuration information is configured, triggering the second device to preferentially receive a paging early indication at a resource location where the type of the second signal is the paging early indication, and determine, based on information carried by the paging early indication, whether to receive a paging message at a resource location of a paging occasion associated with the paging early indication; or
in case that the paging early indication configuration information is not configured, triggering the second device to receive a paging message at a resource location where the type of the second signal is the paging occasion.

In some embodiments, the method further includes:

determining, based on the type of the second signal in the second configuration information and the resource location for receiving the second signal, a type of a received second signal, where the type of the second signal includes a paging occasion or a paging early indication;
determining, based on third configuration information sent from the network device, whether a skip parameter is configured and/or whether a configured skip parameter is activated, where the skip parameter is used to indicate whether to skip a paging early indication occasion and/or to indicate a type of the second signal that the second device preferentially receives; and

in case that the skip parameter is configured and/or the configured skip parameter is activated, triggering the second device to receive a paging message at a resource location where the type of the second signal is the paging occasion; or

in case that the skip parameter is not configured and/or the configured skip parameter is not activated, triggering the second device to preferentially receive a paging early indication at a resource location where the type of the second signal is the paging early indication, and determine, based on information carried by the paging early indication, whether to receive a paging message at a resource location of a paging occasion associated with the paging early indication.

In some embodiments, the paging cycle T in the first input parameter is configured by one or more of the SIB1, a non-access stratum (NAS) message, or a radio resource control (RRC) message; and in case that the paging cycle T configured by one or more of the SIB1, the NAS message, or the RRC message includes multiple configuration values, a minimum value among the multiple configuration values is determined as the paging cycle T.

An embodiment of the present application provides a method for determining low power access or transmission, including:

determining, based on obtained reception capability information or a service requirement, first configuration information and/or second configuration information;

where the reception capability information includes one or more of:

a type of a receiver of a first device;
a sensitivity of a receiver of a first device;
a transition delay of a second device from an ultra-deep sleep state to an active state; or
version information of a communication standard that a second device supports; and
the service requirement includes one or more of: a paging requirement, a data transmission requirement, or a signal transmission requirement.

In some embodiments, determining, based on the obtained reception capability information or the service requirement, the first configuration information and/or the second configuration information includes:

in case that the reception capability information reported from a target device is received, determining, based on the reception capability information reported from the target device, the first configuration information and/or the second configuration information to be sent to the target device; or,

in case that the reception capability information reported from a target device is not received, determining, based on the service requirement, the first configuration information and/or the second configuration information;

where the target device is at least one of all first devices and/or all second devices within a coverage area of a network device.

In some embodiments, determining, based on the reception capability information reported from the target device, the first configuration information and/or the second configuration information to be sent to the target device includes:

determining, based on the type of the receiver of the first device and/or the sensitivity of the receiver of the first device included in the reception capability information, the first configuration information to be sent to the first device, where the first configuration information is used for the first device to determine a resource location for receiving a first signal, and the first signal is used to instruct the first device to wake up a second device; and

determining, based on the transition delay of the second device from the ultra-deep sleep state to the active state included in the reception capability information, the second configuration information to be sent to the second device, where the second configuration information is used for the second device to determine a resource location for receiving a second signal.

In some embodiments, the first configuration information includes one or more of:

a time-domain location of a first signal;
a frequency-domain location or a frequency-domain synchronization raster of a first signal;

a symbol length occupied by a first signal;

a mapping way of a first signal in a time-frequency resource;

a count of repeated transmissions or a maximum count of transmissions of a first signal;

a number of second devices associated with a first signal;

a number of second device groups associated with a first signal; or

a number of resource locations of a second signal associated with a first signal.

In some embodiments, the time-domain location of the first signal includes one or more of:

a reception period of the first signal;

a time-domain start reception location of the first signal within one reception period;

a time-domain end reception location of the first signal within one reception period; or

a first duration of the first signal within one reception period; and

the frequency-domain location of the first signal includes one or more of:

a reception period of the first signal;

a frequency-domain start reception location of the first signal within one reception period;

a frequency-domain end reception location of the first signal within one reception period; or

a frequency-domain first bandwidth of the first signal within one reception period.

In some embodiments, the second configuration information includes one of more of:

a reference time-domain offset, used to represent a time-domain offset between a resource location corresponding to a reference point and a resource location for a second device to receive a second signal, where the resource location corresponding to the reference point is a resource location for a first device to receive a first one of first signals or a resource location for a first device to receive a last one of first signals;

first search space configuration information, used to configure a first period for receiving a second signal, a start reception location offset and a second duration within a single first period, and a type of the second signal;

second search space configuration information, used to configure a second period for receiving a second signal, a start reception location offset and a third duration within a single second period, and a type of the second signal;

reception window configuration information, used to configure any or a combination of a start moment of a reception window, a duration of a reception window, or an end moment of a reception window, where the reception window is used to receive a second signal; or

a count or a maximum count of receptions of the second signal.

In some embodiments, the duration of the reception window is multiple unit durations determined in a unit of a system frame, a slot, a symbol, or a paging cycle.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In some embodiments, the method further includes:

sending a dynamic signaling to a first device and/or a second device;

where the dynamic signaling is used to activate the first configuration information and/or the second configuration information, or the dynamic signaling is used to deactivate the first configuration information and/or the second configuration information.

In some embodiments, the method further includes:

determining, based on the version information of the communication standard that the second device supports included in the reception capability information, third configuration information, where the third configuration information is used to configure a type of a second signal that the second device preferentially receives, and the type of the second signal includes a paging early indication or a paging occasion; and

sending the third configuration information to the first device and/or the second device.

In some embodiments, the third configuration information includes one or more of:

paging early indication configuration information, used to indicate the type of the second signal that the second device preferentially receives; or
a skip parameter, used to indicate whether to skip a paging early indication occasion, and/or used to indicate the type of the second signal that the second device preferentially receives.

An embodiment of the present application further provides an electronic device, including a memory, a transceiver and a processor,
where the memory is used for storing a computer program, the transceiver is used for receiving and sending data under control of the processor, and the processor is used for reading the computer program in the memory and performing following operations:

determining, based on first configuration information sent from a network device, a resource location for a first device to receive a first signal, where the first signal is used to instruct the first device to wake up a second device; and
determining, based on second configuration information sent from the network device and the resource location for the first device to receive the first signal, a resource location for the second device to receive a second signal, where the second signal is used for the second device, after being woken up, to access the network device, or to perform a signal transmission or a data transmission with the network device.

In some embodiments, the first configuration information includes one or more of:

a time-domain location of the first signal;
a frequency-domain location or a frequency-domain synchronization raster of the first signal;
a symbol length occupied by the first signal;
a mapping way of the first signal in a time-frequency resource;
a count of repeated transmissions or a maximum count of transmissions of the first signal;
a number of second devices associated with the first signal;
a number of second device groups associated with the first signal; or
a number of resource locations of a second signal associated with the first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and the resource location for the second device to receive the second signal, where the resource location corresponding to the reference point is a resource location for the first device to receive a first one of the first signals or a resource location for the first device to receive a last one of the first signals;
first search space configuration information, used to configure a first period for receiving the second signal, a start reception location offset and a second duration within a single first period, and a type of the second signal;
second search space configuration information, used to configure a second period for receiving the second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive the second signal; or
a count or a maximum count of receptions of the second signal.

In some embodiments, the duration of the reception window is multiple unit durations determined in a unit of a system frame, a slot, a symbol, or a paging cycle.

In some embodiments, determining, based on the second configuration information sent from the network device and the resource location for the first device to receive the first signal, the resource location for the second device to receive the second signal includes:

determining, based on the start moment of the reception window configured in the reception window configuration information included in the second configuration information and the resource location corresponding to the reference point, a start resource location of the reception window;

determining, based on the start resource location of the reception window and the duration of the reception window, or based on the start resource location of the reception window and the end moment of the reception window configured in the reception window configuration information included in the second configuration information, an end resource location of the reception window; and

determining, based on the second search space configuration information included in the second configuration information, the resource location for the second device to receive the second signal between the start resource location of the reception window and the end resource location of the reception window.

In some embodiments, determining, based on the second configuration information sent from the network device and the resource location for the first device to receive the first signal, the resource location for the second device to receive the second signal includes:

determining, based on the first search space configuration information and/or the second search space configuration information included in the second configuration information, candidate resource locations for receiving the second signal;

among the candidate resource locations, determining, based on a first rule and a first input parameter, a paging frame where a start resource location for receiving the second signal is located as a target paging frame, where the first input parameter is one or more of a system frame where the resource location corresponding to the reference point is located, the paging cycle T, a number N of paging frames within the paging cycle, or the reference time-domain offset in the second configuration information;

in the target paging frame, determining, based on an index calculation rule and a second input parameter, an index value corresponding to a symbol location for receiving the second signal, where the second input parameter is one or more of an identifier of the second device, the number N of paging frames within the paging cycle, or a total number Ns of paging occasions in a single paging frame; and

determining, based on a start reception symbol location set *firstPDCCH-MonitoringOccasionOfPO* configured in a first system information block (SIB1), a paging occasion matching the index value corresponding to the symbol location for receiving the second signal, and taking the paging occasion as the resource location for receiving the second signal.

In some embodiments, determining, based on the second configuration information sent from the network device and the resource location for the first device to receive the first signal, the resource location for the second device to receive the second signal includes:

determining, based on the first search space configuration information and/or the second search space configuration information included in the second configuration information, candidate resource locations for receiving the second signal;

among the candidate resource locations, determining, based on the resource location for the first device to receive the first signal and the reference time-domain offset in the second configuration information, a target paging frame for the second device to receive the second signal; and

in the target paging frame, sequentially determining, based on the second period in the second search space configuration information in the second configuration information, resource locations for receiving the second signal.

In some embodiments, the operations further include:

in case that the second configuration information sent from the network device further includes a fourth duration associated with the first signal for receiving the second signal, determining the resource location for the second device to receive the second signal based on the second configuration information; and

determining the resource location for the second device to receive the second signal based on the second configuration information includes:

obtaining the first period in the first search space configuration information in the second configuration information;

within each first period, sequentially determining, based on the reference time-domain offset in the second configuration information, the resource location for the second device to receive the second signal; and

determining, based on the fourth duration and the reference time-domain offset in the second configuration information and a resource location for receiving a target second signal, a resource location for the first device to receive at least one first signal;

where the fourth duration is an integer multiple of a discontinuous reception cycle or paging cycle for receiving the second signal.

In some embodiments, the operations further include:

receiving the first signal at the resource location for receiving the first signal; and

in case that the count of repeated transmissions or the maximum count of transmissions of the first signal included in the first configuration information is reached, no longer receiving the first signal.

In some embodiments, the operations further include:

receiving the second signal at the resource location for receiving the second signal; and

in case that the maximum count of receptions of the second signal included in the second configuration information is reached and the second signal is not received, the second device enters a sleep state.

In some embodiments, before determining, based on the first configuration information sent from the network device, the resource location for the first device to receive the first signal, the operations further include:

reporting reception capability information to the network device, where the reception capability information is used for the network device to determine the first configuration information and/or the second configuration information; and the reception capability information includes one or more of:

a type of a receiver of the first device;

a sensitivity of a receiver of the first device;

a transition delay of the second device from an ultra-deep sleep state to an active state; or

version information of a communication standard that the second device supports.

In some embodiments, the first rule satisfies following formula:

$$(\text{LP-WUS\_SFN} + \text{LP-WUS\_offset} + \text{SFN}) \bmod T = T \operatorname{div} N,$$

where LP-WUS_SFN represents the system frame where the resource location corresponding to the reference point is located, LP-WUS_offset represents the reference time-domain offset, SFN represents the paging frame where the start resource location for receiving the second signal is located, mod() represents modulo, T represents a discontinuous reception cycle or the paging cycle, and N represents the number of paging frames within the paging cycle.

In some embodiments, the index calculation rule satisfies following formula:

$$i\_s = \operatorname{floor}(\text{UE\_ID}/N) \bmod Ns,$$

where UE_ID represents the identifier of the second device, N represents the number of paging frames within the paging cycle, floor() represents rounding down, mod() represents modulo, Ns is the total number of paging occasions in a single paging frame, and i_s represents the index value corresponding to the symbol location for receiving the second signal.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In some embodiments, the first configuration information and/or the second configuration information is activated by a dynamic signaling, or the first configuration information and/or the second configuration information is deactivated by a dynamic signaling.

In some embodiments, the second search space configuration information includes one or more of:

a period for receiving the second signal;
a start location offset for receiving the second signal;
a third duration for receiving the second signal;
a start reception symbol within a single period for receiving the second signal;
an aggregation level; or
a downlink control information format for determining the type of the second signal.

In some embodiments, the operations further include:

determining, based on the type of the second signal in the second configuration information and the resource location for receiving the second signal, a type of a received second signal, where the type of the second signal includes a paging occasion or a paging early indication;
determining, based on third configuration information sent from the network device, whether paging early indication configuration information is configured, where the paging early indication configuration information is used to indicate a type of the second signal that the second device preferentially receives; and
in case that the paging early indication configuration information is configured, triggering the second device to preferentially receive a paging early indication at a resource location where the type of the second signal is the paging early indication, and determine, based on information carried by the paging early indication, whether to receive a paging message at a resource location of a paging occasion associated with the paging early indication; or
in case that the paging early indication configuration information is not configured, triggering the second device to receive a paging message at a resource location where the type of the second signal is the paging occasion.

In some embodiments, the operations further include:

determining, based on the type of the second signal in the second configuration information and the resource location for receiving the second signal, a type of a received second signal, where the type of the second signal includes a paging occasion or a paging early indication;
determining, based on third configuration information sent from the network device, whether a skip parameter is configured and/or whether a configured skip parameter is activated, where the skip parameter is used to indicate whether to skip a paging early indication occasion and/or to indicate a type of the second signal that the second device preferentially receives; and
in case that the skip parameter is configured and/or the configured skip parameter is activated, triggering the second device to receive a paging message at a resource location where the type of the second signal is the paging occasion; or
in case that the skip parameter is not configured and/or the configured skip parameter is not activated, triggering the second device to preferentially receive a paging early indication at a resource location where the type of the second signal is the paging early indication, and determine, based on information carried by the paging early indication, whether to receive a paging message at a resource location of a paging occasion associated with the paging early indication.

In some embodiments, the paging cycle T in the first input parameter is configured by one or more of the SIB1, a non-access stratum (NAS) message, or a radio resource control (RRC) message; and in case that the paging cycle T configured by one or more of the SIB1, the NAS message, or the RRC message includes multiple configuration values, a minimum value among the multiple configuration values is determined as the paging cycle T.

An embodiment of the present application further provides a network device, including a memory, a transceiver and a processor,

where the memory is used for storing a computer program, the transceiver is used for receiving and sending data under control of the processor, and the processor is used for reading the computer program in the memory and performing following operations:

determining, based on obtained reception capability information or a service requirement, first configuration information and/or second configuration information;
where the reception capability information includes one or more of:

a type of a receiver of a first device;

a sensitivity of a receiver of a first device;
a transition delay of a second device from an ultra-deep sleep state to an active state; or
version information of a communication standard that a second device supports; and
the service requirement includes one or more of: a paging requirement, a data transmission requirement, or a
signal transmission requirement.

In some embodiments, determining, based on the obtained reception capability information or the service requirement, the first configuration information and/or the second configuration information includes:

in case that the reception capability information reported from a target device is received, determining, based on the reception capability information reported from the target device, the first configuration information and/or the second configuration information to be sent to the target device; or,
in case that the reception capability information reported from a target device is not received, determining, based on the service requirement, the first configuration information and/or the second configuration information;
where the target device is at least one of all first devices and/or all second devices within a coverage area of a network device.

In some embodiments, determining, based on the reception capability information reported from the target device, the first configuration information and/or the second configuration information to be sent to the target device includes:

determining, based on the type of the receiver of the first device and/or the sensitivity of the receiver of the first device included in the reception capability information, the first configuration information to be sent to the first device, where the first configuration information is used for the first device to determine a resource location for receiving a first signal, and the first signal is used to instruct the first device to wake up a second device; and
determining, based on the transition delay of the second device from the ultra-deep sleep state to the active state included in the reception capability information, the second configuration information to be sent to the second device, where the second configuration information is used for the second device to determine a resource location for receiving a second signal.

In some embodiments, the first configuration information includes one or more of:

a time-domain location of a first signal;
a frequency-domain location or a frequency-domain synchronization raster of a first signal;
a symbol length occupied by a first signal;
a mapping way of a first signal in a time-frequency resource;
a count of repeated transmissions or a maximum count of transmissions of a first signal;
a number of second devices associated with a first signal;
a number of second device groups associated with a first signal; or
a number of resource locations of a second signal associated with a first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and a resource location for a second device to receive a second signal, where the resource location corresponding to the reference point is a resource location for a first device to receive a first one of first signals or a resource location for a first device to receive a last one of first signals;

first search space configuration information, used to configure a first period for receiving a second signal, a start reception location offset and a second duration within a single first period, and a type of the second signal;

second search space configuration information, used to configure a second period for receiving a second signal, a start reception location offset and a third duration within a single second period, and a type of the second signal;

reception window configuration information, used to configure any or a combination of a start moment of a reception window, a duration of a reception window, or an end moment of a reception window, where the reception window is used to receive a second signal; or

a count or a maximum count of receptions of the second signal.

In some embodiments, the duration of the reception window is multiple unit durations determined in a unit of a system frame, a slot, a symbol, or a paging cycle.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In some embodiments, the operations further include:

sending a dynamic signaling to a first device and/or a second device;

where the dynamic signaling is used to activate the first configuration information and/or the second configuration information, or the dynamic signaling is used to deactivate the first configuration information and/or the second configuration information.

In some embodiments, the operations further include:

determining, based on the version information of the communication standard that the second device supports included in the reception capability information, third configuration information, where the third configuration information is used to configure a type of a second signal that the second device preferentially receives, and the type of the second signal includes a paging early indication or a paging occasion; and

sending the third configuration information to the first device and/or the second device.

In some embodiments, the third configuration information includes one or more of:

paging early indication configuration information, used to indicate the type of the second signal that the second device preferentially receives; or

a skip parameter, used to indicate whether to skip a paging early indication occasion, and/or used to indicate the type of the second signal that the second device preferentially receives.

An embodiment of the present application further provides an apparatus for determining low power access or transmission, including:

a first determining module, used for determining, based on first configuration information sent from a network device, a resource location for a first device to receive a first signal, where the first signal is used to instruct the first device to wake up a second device; and

a second determining module, used for determining, based on second configuration information sent from the network device and the resource location for the first device to receive the first signal, a resource location for the second device to receive a second signal, where the second signal is used for the second device, after being woken up, to access the network device, or to perform a signal transmission or a data transmission with the network device.

In some embodiments, the first configuration information includes one or more of:

a time-domain location of the first signal;

a frequency-domain location or a frequency-domain synchronization raster of the first signal;

a symbol length occupied by the first signal;

a mapping way of the first signal in a time-frequency resource;

a count of repeated transmissions or a maximum count of transmissions of the first signal;
a number of second devices associated with the first signal;
a number of second device groups associated with the first signal; or
a number of resource locations of a second signal associated with the first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and the resource location for the second device to receive the second signal, where the resource location corresponding to the reference point is a resource location for the first device to receive a first one of the first signals or a resource location for the first device to receive a last one of the first signals;
first search space configuration information, used to configure a first period for receiving the second signal, a start reception location offset and a second duration within a single first period, and a type of the second signal;
second search space configuration information, used to configure a second period for receiving the second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive the second signal; or
a count or a maximum count of receptions of the second signal.

In some embodiments, the duration of the reception window is multiple unit durations determined in a unit of a system frame, a slot, a symbol, or a paging cycle.
In some embodiments, the second determining module is used for:

determining, based on the start moment of the reception window configured in the reception window configuration information included in the second configuration information and the resource location corresponding to the reference point, a start resource location of the reception window;
determining, based on the start resource location of the reception window and the duration of the reception window, or based on the start resource location of the reception window and the end moment of the reception window configured in the reception window configuration information included in the second configuration information, an end resource location of the reception window; and
determining, based on the second search space configuration information included in the second configuration information, the resource location for the second device to receive the second signal between the start resource location of the reception window and the end resource location of the reception window.

In some embodiments, the second determining module is used for:

determining, based on the first search space configuration information and/or the second search space configuration information included in the second configuration information, candidate resource locations for receiving the second signal;
among the candidate resource locations, determining, based on a first rule and a first input parameter, a paging frame where a start resource location for receiving the second signal is located as a target paging frame, where the first input parameter is one or more of a system frame where the resource location corresponding to the reference point is located, the paging cycle T, a number N of paging frames within the paging cycle, or the reference time-domain offset in the second configuration information;

in the target paging frame, determining, based on an index calculation rule and a second input parameter, an index value corresponding to a symbol location for receiving the second signal, where the second input parameter is one or more of an identifier of the second device, the number N of paging frames within the paging cycle, or a total number Ns of paging occasions in a single paging frame; and

determining, based on a start reception symbol location set *firstPDCCH-MonitoringOccasionOfPO* configured in a first system information block (SIB1), a paging occasion matching the index value corresponding to the symbol location for receiving the second signal, and taking the paging occasion as the resource location for receiving the second signal.

In some embodiments, the second determining module is used for:

determining, based on the first search space configuration information and/or the second search space configuration information included in the second configuration information, candidate resource locations for receiving the second signal;

among the candidate resource locations, determining, based on the resource location for the first device to receive the first signal and the reference time-domain offset in the second configuration information, a target paging frame for the second device to receive the second signal; and

in the target paging frame, sequentially determining, based on the second period in the second search space configuration information in the second configuration information, resource locations for receiving the second signal.

In some embodiments, the apparatus further includes:

a third determining module, used for, in case that the second configuration information sent from the network device further includes a fourth duration associated with the first signal for receiving the second signal, determining the resource location for the second device to receive the second signal based on the second configuration information; and

the third determining module is used for:

obtaining the first period in the first search space configuration information in the second configuration information;

within each first period, sequentially determining, based on the reference time-domain offset in the second configuration information, the resource location for the second device to receive the second signal; and

determining, based on the fourth duration and the reference time-domain offset in the second configuration information and a resource location for receiving a target second signal, a resource location for the first device to receive at least one first signal;

where the fourth duration is an integer multiple of a discontinuous reception cycle or paging cycle for receiving the second signal.

In some embodiments, the apparatus further includes a first receiving module, and the first receiving module is used for:

receiving the first signal at the resource location for receiving the first signal; and

in case that the count of repeated transmissions or the maximum count of transmissions of the first signal included in the first configuration information is reached, no longer receiving the first signal.

In some embodiments, the apparatus further includes a second receiving module, and the second receiving module is used for:

receiving the second signal at the resource location for receiving the second signal; and

in case that the maximum count of receptions of the second signal included in the second configuration information is reached and the second signal is not received, the second device enters a sleep state.

In some embodiments, the apparatus further includes:

a reporting module, used for reporting reception capability information to the network device, where the reception capability information is used for the network device to determine the first configuration information and/or the second configuration information; and

the reception capability information includes one or more of:

a type of a receiver of the first device;
a sensitivity of a receiver of the first device;
a transition delay of the second device from an ultra-deep sleep state to an active state; or
version information of a communication standard that the second device supports.

In some embodiments, the first rule satisfies following formula:

$$(\text{LP-WUS\_SFN} + \text{LP-WUS\_offset} + \text{SFN}) \bmod T = T \operatorname{div} N,$$

where LP-WUS_SFN represents the system frame where the resource location corresponding to the reference point is located, LP-WUS_offset represents the reference time-domain offset, SFN represents the paging frame where the start resource location for receiving the second signal is located, mod() represents modulo, T represents a discontinuous reception cycle or the paging cycle, and N represents the number of paging frames within the paging cycle.

In some embodiments, the index calculation rule satisfies following formula:

$$i\_s = \operatorname{floor} (\text{UE\_ID}/N) \bmod \text{Ns},$$

where UE_ID represents the identifier of the second device, N represents the number of paging frames within the paging cycle, floor() represents rounding down, mod() represents modulo, Ns is the total number of paging occasions in a single paging frame, and i_s represents the index value corresponding to the symbol location for receiving the second signal.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In some embodiments, the first configuration information and/or the second configuration information is activated by a dynamic signaling, or the first configuration information and/or the second configuration information is deactivated by a dynamic signaling.

In some embodiments, the second search space configuration information includes one or more of:

a period for receiving the second signal;
a start location offset for receiving the second signal;
a third duration for receiving the second signal;
a start reception symbol within a single period for receiving the second signal;
an aggregation level; or
a downlink control information format for determining the type of the second signal.

In some embodiments, the apparatus further includes:

a fourth determining module, used for determining, based on the type of the second signal in the second configuration information and the resource location for receiving the second signal, a type of a received second signal, where the type of the second signal includes a paging occasion or a paging early indication; and
a fifth determining module, used for determining, based on third configuration information sent from the network device, whether paging early indication configuration information is configured, where the paging early indication configuration information is used to indicate a type of the second signal that the second device preferentially receives; in case that the paging early indication configuration information is configured, triggering the second device to preferentially receive a paging early indication at a resource location where the type of the second signal is the paging early indication, and determine, based on information carried by the paging early indication, whether to receive a paging message at a resource location of a paging occasion associated with the paging early indication; or
in case that the paging early indication configuration information is not configured, triggering the second device to receive a paging message at a resource location where the type of the second signal is the paging occasion.

In some embodiments, the apparatus further includes:

a fourth determining module, used for determining, based on the type of the second signal in the second configuration information and the resource location for receiving the second signal, a type of a received second signal, where the type of the second signal includes a paging occasion or a paging early indication; and

a sixth determining module, used for determining, based on third configuration information sent from the network device, whether a skip parameter is configured and/or whether a configured skip parameter is activated, where the skip parameter is used to indicate whether to skip a paging early indication occasion and/or to indicate a type of the second signal that the second device preferentially receives;

in case that the skip parameter is configured and/or the configured skip parameter is activated, triggering the second device to receive a paging message at a resource location where the type of the second signal is the paging occasion; or

in case that the skip parameter is not configured and/or the configured skip parameter is not activated, triggering the second device to preferentially receive a paging early indication at a resource location where the type of the second signal is the paging early indication, and determine, based on information carried by the paging early indication, whether to receive a paging message at a resource location of a paging occasion associated with the paging early indication.

In some embodiments, the paging cycle T in the first input parameter is configured by one or more of the SIB1, a non-access stratum (NAS) message, or a radio resource control (RRC) message; and in case that the paging cycle T configured by one or more of the SIB1, the NAS message, or the RRC message includes multiple configuration values, a minimum value among the multiple configuration values is determined as the paging cycle T.

An embodiment of the present application further provides an apparatus for determining low power access or transmission, including:

a configuration determining module, used for determining, based on obtained reception capability information or a service requirement, first configuration information and/or second configuration information;
where the reception capability information includes one or more of:

a type of a receiver of a first device;
a sensitivity of a receiver of a first device;
a transition delay of a second device from an ultra-deep sleep state to an active state; or
version information of a communication standard that a second device supports; and
the service requirement includes one or more of: a paging requirement, a data transmission requirement, or a signal transmission requirement.

In some embodiments, the configuration determining module includes:

a first determining unit, used for, in case that the reception capability information reported from a target device is received, determining, based on the reception capability information reported from the target device, the first configuration information and/or the second configuration information to be sent to the target device; or,
a second determining unit, used for, in case that the reception capability information reported from a target device is not received, determining, based on the service requirement, the first configuration information and/or the second configuration information;
where the target device is at least one of all first devices and/or all second devices within a coverage area of a network device.

In some embodiments, the first determining unit is used for:

determining, based on the type of the receiver of the first device and/or the sensitivity of the receiver of the first device included in the reception capability information, the first configuration information to be sent to the first device, where the first configuration information is used for the first device to determine a resource location for receiving a first signal, and the first signal is used to instruct the first device to wake up a second device; and
determining, based on the transition delay of the second device from the ultra-deep sleep state to the active state included in the reception capability information, the second configuration information to be sent to the second device, where the second configuration information is used for the second device to determine a resource location for receiving a second signal.

In some embodiments, the first configuration information includes one or more of:

a time-domain location of a first signal;
a frequency-domain location or a frequency-domain synchronization raster of a first signal;

a symbol length occupied by a first signal;
a mapping way of a first signal in a time-frequency resource;
a count of repeated transmissions or a maximum count of transmissions of a first signal;
a number of second devices associated with a first signal;
a number of second device groups associated with a first signal; or
a number of resource locations of a second signal associated with a first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and a resource location for a second device to receive a second signal, where the resource location corresponding to the reference point is a resource location for a first device to receive a first one of first signals or a resource location for a first device to receive a last one of first signals;
first search space configuration information, used to configure a first period for receiving a second signal, a start reception location offset and a second duration within a single first period, and a type of the second signal;
second search space configuration information, used to configure a second period for receiving a second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive a second signal; or
a count or a maximum count of receptions of the second signal.

In some embodiments, the duration of the reception window is multiple unit durations determined in a unit of a system frame, a slot, a symbol, or a paging cycle.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In some embodiments, the apparatus further includes:

a first sending module, used for sending a dynamic signaling to a first device and/or a second device;
where the dynamic signaling is used to activate the first configuration information and/or the second configuration information, or the dynamic signaling is used to deactivate the first configuration information and/or the second configuration information.

In some embodiments, the apparatus further includes:

a seventh determining module, used for determining, based on the version information of the communication standard that the second device supports included in the reception capability information, third configuration information, where the third configuration information is used to configure a type of a second signal that the second device preferentially receives, and the type of the second signal includes a paging early indication or a paging occasion; and

a second sending module, used for sending the third configuration information to the first device and/or the second device.

In some embodiments, the third configuration information includes one or more of:

paging early indication configuration information, used to indicate the type of the second signal that the second device preferentially receives; or
a skip parameter, used to indicate whether to skip a paging early indication occasion, and/or used to indicate the type of the second signal that the second device preferentially receives.

An embodiment of the present application further provides a processor readable storage medium storing a computer program, where the computer program is used for causing a processor to perform any of the methods described above.
An embodiment of the present application further provides a computer readable storage medium storing a computer program, where the computer program is used for causing a computer to perform any of the methods described above.
An embodiment of the present application further provides a chip product storing a computer program, where the computer program is used for causing the chip product to perform any of the methods described above.
In the methods and apparatuses for determining low power access or transmission, the electronic device, the network device, and the storage media provided by the embodiments of the present application, through first configuration information and second configuration information configured by a network device, a resource location of a first signal determined based on the first configuration information, and a resource location of a second signal dynamically determined based on the second configuration information, a delay of a second device waiting for the second signal after being woken up is reduced, and energy consumption of the second device while waiting for the second signal is reduced simultaneously.

BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.

FIG. 1 is a first schematic flowchart of a method for determining low power access or transmission according to an embodiment of the present application;
FIG. 2 is a second schematic flowchart of a method for determining low power access or transmission according to an embodiment of the present application;
FIG. 3 is a schematic diagram of a distribution of resource locations for receiving a second signal in a reception window according to an embodiment of the present application;
FIG. 4 is a first schematic diagram of a distribution of resource locations for receiving a first signal and a second signal according to an embodiment of the present application;
FIG. 5 is a second schematic diagram of a distribution of resource locations for receiving a first signal and a second signal according to an embodiment of the present application;
FIG. 6 is a schematic structural diagram of an electronic device according to an embodiment of the present application;
FIG. 7 is a schematic structural diagram of a network device according to an embodiment of the present application;
FIG. 8 is a first schematic structural diagram of an apparatus for determining low power access or transmission according to an embodiment of the present application; and
FIG. 9 is a second schematic structural diagram of an apparatus for determining low power access or transmission according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.
In the embodiments of the present application, the term "multiple" refers to two or more than two, and other quantifiers are similar.
In the embodiments of the present application, "determine B based on A" means that the factor A should be considered when determining B and it is not limited to "B may be determined based on A alone", but should also include: "determine B based on A and C", "determine B based on A, C and E", "determine C based on A, and further determine B based on C", and the like. It may also include taking A as a condition for determining B. For example, "When A meets a first condition, use the first method to determine B". For example, "When A meets a second condition, determine B", and the like. For example, "When A meets a third condition, determine B based on a first parameter", and the like. Of course, it may also be a condition that takes A as a factor for determining B. For example, "When A meets the first condition, use the first method to determine C, and further determine B based on C", and the like.

The solutions according to the embodiments of the present application may be applicable to various systems, for example, 5th generation (5G) systems, 5G advanced systems, 6th generation (6G) systems, and their evolution systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communication (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

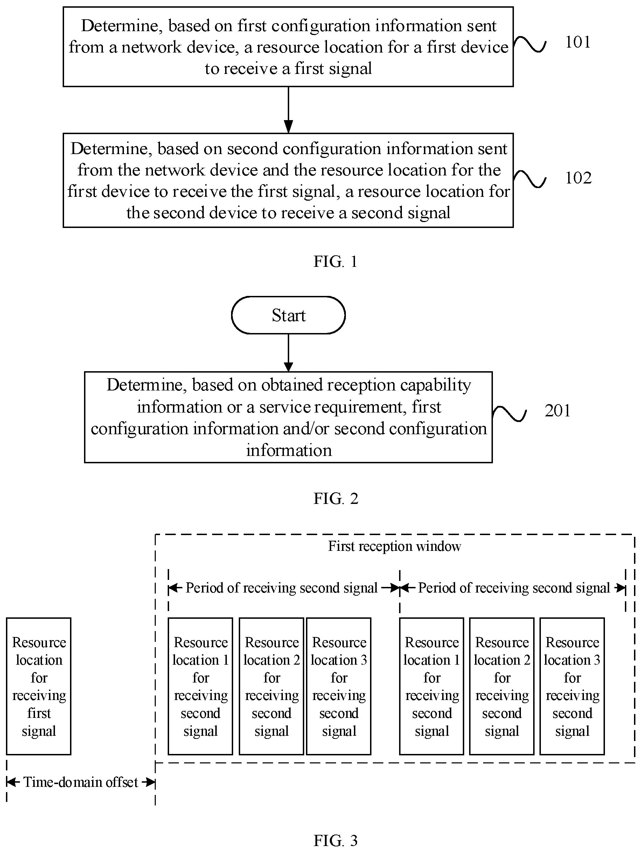

FIG. 1 is a first schematic flowchart of a method for determining low power access or transmission according to an embodiment of the present application. As shown in FIG. 1, the method includes following steps.

Step 101: determine, based on first configuration information sent from a network device, a resource location for a first device to receive a first signal, where the first signal is used to instruct the first device to wake up a second device.

In an embodiment, after receiving the first configuration information sent from the network device, the resource location for the first device to receive the first signal is determined based on the first configuration information. That is, a time-frequency resource location where the first device receives the first signal is determined. The time-frequency resource location is divided into two aspects, namely a time-domain resource location and a frequency-domain resource location. According to different granularities of network resource division, it may be determined that units of the time-domain resource location include a system frame, a slot, a symbol, etc., and units of the frequency-domain resource location include Hertz (Hz). The time-frequency resource location may also be represented in a unit of a resource elements (RE), a resource element groups (REG), or a resource block (RB). The first device includes a low power wake-up receiver (LP-WUR).

At the resource location for receiving the first signal, the first device receives the first signal sent from the network device. The first signal is used to instruct the first device to wake up the second device. That is, after receiving the first signal, the first device may wake up one or more second devices associated with or connected to the first device, and these second devices associated with or connected to the first device are in a sleep state. The first signal may be a low power wake up signal (LP-WUS), and the second device includes a main radio (MR).

Step 102: determine, based on second configuration information sent from the network device and the resource location for the first device to receive the first signal, a resource location for the second device to receive a second signal, where the second signal is used for the second device, after being woken up, to access the network device, or to perform a signal transmission or a data transmission with the network device.

In an embodiment, in addition to receiving the first configuration information sent from the network device, the second configuration information sent from the network device is also received. The second configuration information may configure an offset between the resource location for receiving the second signal and the resource location for receiving the first signal, a configuration parameter for periodically receiving the second signal, a reception window configuration parameter for receiving the second signal, etc.

Based on the above-mentioned second configuration information and combined with the resource location for receiving the first signal, the resource location for the second device to receive the second signal is further determined. The second device receives the second signal at the resource location for receiving the second signal. This second signal enables the woken-up second device to access the network device, or to perform data transmission or service signal transmission with the network device. The first device and the second device may belong to a same terminal or may be different terminals.

In the method for determining low power access or transmission provided by the embodiments of the present application, through first configuration information and second configuration information configured by a network device, a resource location of a first signal determined based on the first configuration information, and a resource location of a second signal dynamically determined based on the second configuration information, a delay of a second device waiting for the second signal after being woken up is reduced, and energy consumption of the second device while waiting for the second signal is reduced simultaneously.

In some embodiments, before determining, based on the first configuration information sent from the network device, the resource location for the first device to receive the first signal, the method further includes:

reporting reception capability information to the network device, where the reception capability information is used for the network device to determine the first configuration information and/or the second configuration information; and the reception capability information includes one or more of:

a type of a receiver of the first device;
a sensitivity of a receiver of the first device;
a transition delay of the second device from an ultra-deep sleep state to an active state; or
version information of a communication standard that the second device supports.

In an embodiment, before receiving the first configuration information and the second configuration information sent from the network device, the first device and/or the second device may report the reception capability information, and the first device and the second device may know the reception capability information of each other.

The reception capability information includes one or more of: the type of the receiver of the first device, the sensitivity of the receiver of the first device, the transition delay of the second device from the ultra-deep sleep state to the active state, and the version information of the communication standard that the second device supports. The first device may acquire the reception capability information of the second device associated with or connected to the first device, and then report the reception capability information of the second device to the network device combined with the reception capability information of the first device. Alternatively, the second device may know the reception capability information of the first device associated with or connected to the second device, and then report the reception capability information of the first device to the network device combined with the reception capability information of the second device. Alternatively, the first device reports its own reception capability information to the network device, the second device reports its own reception capability information to the network device, and the network device determines the first configuration information to be sent to the first device and the second configuration information to be sent to the second device. The type of receiver of the first device is, for example, RF-based or baseband-based. The sensitivity of the receiver of the first device is mainly used to indicate how sensitive the receiver of the first device is to a signal, and a unit of the sensitivity is dBm. Regarding the transition delay of the second device from the ultra-deep sleep state to the active state, transition delays corresponding to different second devices are different. For example, some second devices have a transition delay of 400 ms, and some second devices have a transition delay of 800 ms. The version information of the communication standard that the second device supports mainly indicates whether the second device supports release 16 (Rel16), release 17 (Rel17), or a higher-level communication standard. Since the first device and the second device have an association relationship, after receiving the first signal, the first device may determine which one second device or multiple second devices to wake up.

In some embodiments, the first configuration information includes one or more of:

a time-domain location of the first signal;
a frequency-domain location or a frequency-domain synchronization raster of the first signal;
a symbol length occupied by the first signal;
a mapping way of the first signal in a time-frequency resource;
a count of repeated transmissions or a maximum count of transmissions of the first signal;
a number of second devices associated with the first signal;
a number of second device groups associated with the first signal; or
a number of resource locations of a second signal associated with the first signal.

In an embodiment, the first configuration information is used to configure related parameters for receiving the first signal, including one or more of the following:

the time-domain location of the first signal, indicating multiple specific locations where the first signal is distributed in the time domain, which may be a periodic distribution, or a non-periodic distribution based on multiple specific locations configured by this parameter; a specific start distribution location, a specific end distribution location, a specific duration, etc., of the first signal in the time domain of each period may also be configured; this may be understood as performing segment transmission of the first signal within one period, or performing repeated transmission of the first signal within one period, etc.;

the frequency-domain location of the first signal, indicating multiple specific locations where the first signal is distributed in the frequency domain, which may be a periodic distribution, or a non-periodic distribution based on multiple specific locations configured by this parameter; a specific start distribution location, a specific end distribution location, a specific first bandwidth, etc., of the first signal in the frequency domain of each period may also be configured; this may be understood as performing, through multiple frequency bands, parallel transmission of the first signal within one period, or performing, through multiple frequency bands, repeated transmission of the first signal within one period, etc.;

the frequency-domain synchronization raster of the first signal and the frequency-domain location of the first signal play a same role, only differing in representation; the frequency-domain synchronization raster of the first signal represents a center frequency and a corresponding bandwidth of a distribution of the first signal;

the symbol length occupied by the first signal, representing a total number of symbols occupied by a physical resource unit occupied by one signal;

the mapping way of the first signal in the time-frequency resource, representing a mapping relationship between each first signal and the time-frequency resource;

the count of repeated transmissions or a maximum count of transmissions of the first signal, representing the count of repeated transmissions the network device sends the first signal, or the maximum count of transmissions the network device sends the first signal; this may be understood as the count of repeated transmissions the network device may send the first signal or the maximum count of transmissions the network device may send the first signal; after reaching the count of repeated transmissions or the maximum count of transmissions, the network side no longer sends the first signal;

the number of second devices associated with the first signal, which is mainly used to configure how many second devices are associated with the first device; through this configuration information, it may be determined how many second devices the first device receiving the first signal wakes up; the specific second devices to be woken up are determined based on identifiers of the second devices associated with the first device; for the first device, its associated second devices are already configured;

the number of second device groups associated with the first signal, which is mainly used to configure how many second device groups are associated with the first device; through this configuration information, it may be determined how many second device groups the first device receiving the first signal wakes up; the specific second device groups to be woken up are determined based on identifiers of the second devices associated with the first device; for the first device, its associated second device groups are already configured; in addition, the number of second devices associated with the first signal and the number of second device groups associated with the first signal may be used jointly to configure which second device(s) in which second device groups the first device is associated with; or the number of resource locations of the second signal associated with the first signal; the first signal may wake up a second device and/or a second device group on the resource of the associated second signal.

Through the above-mentioned first configuration information, a resource location where a first device receives a first signal may be dynamically determined through various configuration parameters, which is more flexible than a traditional fixed configuration.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In an embodiment, the time-domain location of the first signal may be represented by one or more parameters: the reception period of the first signal, the time-domain start reception location of the first signal within one reception period, the time-domain end reception location of the first signal within one reception period, or the first duration of the first signal within one reception period. In the time domain, the time-domain start reception location within one reception period may be represented as a time-domain start reception moment within one reception period, the time-domain end reception location within one reception period may be represented as a time-domain end reception moment within one reception period, the first duration within one reception period may be represented as a duration of receiving the first signal within one reception period, and the this duration is generally less than the reception period of the first signal.

The frequency-domain location of the first signal may be represented by one or more parameters of the reception period of the first signal, the frequency-domain start reception location of the first signal within one reception period, the frequency-domain end reception location of the first signal within one reception period, or the frequency-domain first bandwidth of the first signal within one reception period. In the frequency domain, the frequency-domain start reception location within one reception period may be represented as a frequency-domain start reception frequency within one reception period, the frequency-domain end reception location within one reception period may be represented as a frequency-domain end reception frequency within one reception period, the frequency-domain first bandwidth within one reception period may be represented as a frequency range of receiving the first signal within one reception period.

Through the above-mentioned second configuration information, appropriate second configuration information may be configured for the second device based on a length of the transition delay of the second device, effectively reducing a waiting time of the second device. For example, a longer reference time-domain offset may be configured for a second device with a longer transition delay, and a shorter reference time-domain offset may be configured for a second device with a shorter transition delay, adapting to second devices with different transition delays.

In some embodiments, the second configuration information includes one of more of:

a reference time-domain offset, used to represent a time-domain offset between a resource location corresponding to a reference point and the resource location for the second device to receive the second signal, where the resource location corresponding to the reference point is a resource location for the first device to receive a first one of the first signals or a resource location for the first device to receive a last one of the first signals;
first search space configuration information, used to configure a first period for receiving the second signal, a start reception location offset and a second duration within a single first period, and a type of the second signal;
second search space configuration information, used to configure a second period for receiving the second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive the second signal; or
a count or a maximum count of receptions of the second signal.

In an embodiment, the second configuration information may be configured through one or more of the following parameters:

the reference time-domain offset, representing the time-domain offset between the resource location corresponding to the reference point and the resource location for receiving the second signal, where the resource location corresponding to the reference point is the resource location for receiving the first one of first signals, or the resource location for receiving the last one of first signals;

the first search space configuration information, which is existing search space configuration information, used to configure the first period for receiving the second signal, the start reception location offset and the second duration within a single first period, and the type of the second signal;

the second search space configuration information, which is additional search space configuration information; distinguishing from the first search space configuration information, the name of the second search space configuration information is different from the name of the first search space configuration information; in addition, values of some configuration parameters in the second search space configuration information are different from values of the same configuration parameters in the first search space configuration information; the configuration parameters of the second search space configuration information are used to configure the second period for receiving the second signal, the start reception location offset and the third duration within a single second period, and the type of the second signal; the configuration parameters of the second search space configuration information may also configure an aggregation level, a start reception symbol location with finer granularity for receiving the second signal, etc.;

the reception window configuration information, used to configure any or a combination of the start moment of the reception window, the duration of the reception window, or the end moment of the reception window, where the reception window is used to receive the second signal; that is, a time window for receiving the second signal is configured; different from the first search space configuration information or the second search space configuration information, this reception window configuration information is not periodic; in an embodiment, a specific duration of the reception window may be determined by configuring the start moment and the end moment of the reception window, or the start moment and the duration of the reception window, or the duration and the end moment of the reception window; the duration of the reception window may be expressed in different time units;

the maximum count of receptions of the second signal; this parameter is configured in the second configuration information to prevent the second device from remaining in a wake-up state and waiting to receive the second signal sent from the network device, which has high power consumption; or

the count of receptions of the second signal, which is mainly used to configure a fixed count for the second device to receive the second signal; that is, after a count of consecutive receptions of the second signal reaches this value, the second device no longer receives the second signal.

In some embodiments, the duration of the reception window is multiple unit durations determined in a unit of a system frame, a slot, a symbol, or a paging cycle.

In an embodiment, the duration of the reception window may be in the unit of a system frame, a slot, a symbol, or a paging cycle, and may be multiple system frames, multiple slots, multiple symbols, or multiple paging cycles.

In some embodiments, the second search space configuration information includes one or more of:

a period for receiving the second signal;
a start location offset for receiving the second signal;
a third duration for receiving the second signal;
a start reception symbol within a single period for receiving the second signal;
an aggregation level; or
a downlink control information format for determining the type of the second signal.

In an embodiment, configuration parameters of the second search space configuration information include any or a combination of the following:

the period for receiving the second signal, that is, the second period, which represents a specific value of a periodic reception of the second signal;

the start reception location offset for receiving the second signal, that is, an offset from a start moment in each second period;

the third duration for receiving the second signal, that is, a time length used to receive the second signal within each second period, and this time length is less than a value of the second period;

the start reception symbol within a single period for receiving the second signal, that is, the start reception symbol where the resource location for receiving the second signal is located within each second period;

the aggregation level (AL), used to determine reception information of the second signal; or

the downlink control information (DCI) format, that is, a format of DCI, such as DCI Format0_0 and DCI Format1_0, used to determine the type of the second signal.

In some embodiments, determining, based on the second configuration information sent from the network device and the resource location for the first device to receive the first signal, the resource location for the second device to receive the second signal includes:

determining, based on the start moment of the reception window configured in the reception window configuration information included in the second configuration information and the resource location corresponding to the reference point, a start resource location of the reception window;

determining, based on the start resource location of the reception window and the duration of the reception window, or based on the start resource location of the reception window and the end moment of the reception window configured in the reception window configuration information included in the second configuration information, an end resource location of the reception window; and

determining, based on the second search space configuration information included in the second configuration information, the resource location for the second device to receive the second signal between the start resource location of the reception window and the end resource location of the reception window.

In an embodiment, there may be multiple ways for determining the resource location for receiving the second signal based on the second configuration information and the resource location for receiving the first signal. In one way, the second configuration information includes the reception window configuration information and the second search space configuration information.

Based on the reception window configuration information included in the second configuration information, a start location of the reception window and a duration of the reception window or a start location of the reception window and an end location of the reception window configured in the reception window configuration information are obtained.

Based on the start moment of the reception window configured in the reception window configuration information, and the resource location corresponding to the reference point, the start resource location of the reception window is determined.

Furthermore, based on the start resource location of the reception window and the duration of the reception window, the end resource location of the reception window is determined; or based on the start resource location of the reception window and the end location of the reception window, the end resource location of the receiving window is determined.

Between the start resource location and the end resource location of this reception window, the resource location for the second device to receive the second signal is determined based on the configuration parameter of the second search space configuration information included in the second configuration information.

In some embodiments, determining, based on the second configuration information sent from the network device and the resource location for the first device to receive the first signal, the resource location for the second device to receive the second signal includes:

determining, based on the first search space configuration information and/or the second search space configuration information included in the second configuration information, candidate resource locations for receiving the second signal;

among the candidate resource locations, determining, based on a first rule and a first input parameter, a paging frame where a start resource location for receiving the second signal is located as a target paging frame, where the first input parameter is one or more of a system frame where the resource location corresponding to the reference point is located, the paging cycle T, a number N of paging frames within the paging cycle, or the reference time-domain offset in the second configuration information;

in the target paging frame, determining, based on an index calculation rule and a second input parameter, an index value corresponding to a symbol location for receiving the second signal, where the second input parameter is one or more of an identifier of the second device, the number N of paging frames within the paging cycle, or a total number Ns of paging occasions in a single paging frame; and

determining, based on a start reception symbol location set *firstPDCCH-MonitoringOccasionOfPO* configured in a first system information block (SIB1), a paging occasion matching the index value corresponding to the symbol location for receiving the second signal, and taking the paging occasion as the resource location for receiving the second signal.

In an embodiment, in addition to determining the resource location for receiving the second signal based on the reception window configuration information and the second search space configuration information in the second configuration information, the candidate resource locations for receiving the second signal may also be determined based on the first search space configuration information and/or the second search space configuration information configured in the second configuration information; then, among these candidate resource locations, the resource location for the second device to receive the second signal is determined based on a corresponding preset rule.

Associated parameters required in the preset rule are obtained, that is, the first input parameter of the first rule and the second input parameter of the index calculation rule are obtained. Both the first input parameter and the second input parameter may be configured through one or more of a first system information block (SIB1), a non-access stratum (NAS) messages, a wireless access network (RAN) message, or a radio resource control (RRC) message, where the first input parameter is one or more of the system frame where the resource location corresponding to the reference point is located, the paging cycle T, the number N of paging frames within the paging cycle, or the reference time-domain offset in the second configuration information, and the second input parameter is one or more of the identifier of the second device, the number N of paging frames within the paging cycle, or a total number Ns of paging occasions in a single paging frame.

The resource location for receiving the first one of first signals and the resource location for receiving the last one of first signals are taken as the resource locations corresponding to the reference point, and the paging frame where the resource location corresponding to the reference point is located is further determined.

The first rule, combined with the first input parameter, is used to determine the paging frame where the start resource location for receiving the second signal is located, as the target paging frame, where the first rule is used to define one or more of the following relationships:

a corresponding relationship between the paging frame where the resource location corresponding to the reference point is located and the paging frame where the start resource location of the second signal is located;

a corresponding relationship between the paging cycle T and the paging frame where the start resource location of the second signal is located;

a corresponding relationship between the number of paging frames N within the paging cycle and the paging frame where the start resource location of the second signal is located; or

a corresponding relationship between the time-domain offset in the second configuration information and the paging frame where the start resource location of the second signal is located.

The index calculation rule, combined with the second input parameter, is used to determine the index value corresponding to the second signal, where the index calculation rule is used to define one or more of the following relationships:

a corresponding relationship between the identifier of the second device and the index value corresponding to the symbol location for receiving the second signal;

a corresponding relationship between the number N of paging frames within the paging cycle and the index value corresponding to the symbol location for receiving the second signal; or

a corresponding relationship between the total number Ns of paging occasions in a single paging frame and the index value corresponding to the symbol location for receiving the second signal.

The start reception symbol location set *firstPDCCH-MonitoringOccasionOfPO* configured in the first system information block (SIB1) is obtained. This start reception symbol location set is used to represent a corresponding relationship between a monitoring paging occasion and the index value corresponding to the symbol location for receiving the second signal.

In this start reception symbol location set, the index value corresponding to the symbol location for receiving the second signal is used for searching or matching, to determine the paging occasion that matches the index value corresponding to the symbol location for receiving the second signal, and the paging occasion is used as the resource location for receiving the second signal.

In some embodiments, the first rule satisfies following formula:

$$(\text{LP-WUS\_SFN} + \text{LP-WUS\_offset} + \text{SFN}) \bmod T = T \text{ div } N,$$

where LP-WUS_SFN represents the system frame where the resource location corresponding to the reference point is located, LP-WUS_offset represents the reference time-domain offset, SFN represents the paging frame where the start resource location for receiving the second signal is located, mod() represents modulo, T represents a discontinuous reception cycle or the paging cycle, and N represents the number of paging frames within the paging cycle.

The paging cycle T may be configured via an SIB1 message, an RRC message, an NAS message, or an RAN message. In case that the paging cycle T configured via the SIB1 message, the RRC message, the NAS message, or the RAN message includes multiple values, for example, in case that the paging cycle T configured via the SIB1 message is $T_1$, the paging cycle T configured via the RRC message is $T_2$, the paging cycle T configured via the NAS message is $T_3$, and the paging cycle T configured via the RAN message is $T_4$, and $T_2 < T_1 < T_3 < T_4$, the minimum value $T_2$ among these values is determined as the value of the paging cycle T, that is, the value of the paging cycle T is $T_2$. The number N of paging frames within the paging cycle and the total number Ns of paging occasions in a single paging frame may be configured via an SIB1 message.

In some embodiments, the index calculation rule satisfies following formula:

$$i\_s = \mathrm{floor}\ (UE\_ID/N)\ \mathrm{mod}\ Ns,$$

where UE_ID represents the identifier of the second device, N represents the number of paging frames within the paging cycle, floor() represents rounding down, mod() represents modulo, Ns is the total number of paging occasions in a single paging frame, and i_s represents the index value corresponding to the symbol location for receiving the second signal.

In some embodiments, determining, based on the second configuration information sent from the network device and the resource location for the first device to receive the first signal, the resource location for the second device to receive the second signal includes:

determining, based on the first search space configuration information and/or the second search space configuration information included in the second configuration information, candidate resource locations for receiving the second signal;

among the candidate resource locations, determining, based on the resource location for the first device to receive the first signal and the reference time-domain offset in the second configuration information, a target paging frame for the second device to receive the second signal; and

in the target paging frame, sequentially determining, based on the second period in the second search space configuration information in the second configuration information, resource locations for receiving the second signal.

In an embodiment, in addition to the above-mentioned way for determining the resource location for the second device to receive the second signal, it can also be determined using the following way:

the candidate resource locations for receiving the second signal are determined based on the first search space configuration information and/or the second search space configuration information configured in the second configuration information; then, among these candidate resource locations, the resource location for the second device to receive the second signal is determined based on the resource location for the first device to receive the first signal and the second search space configuration information in the second configuration information.

Among the above-mentioned candidate resource locations, the target paging frame for the second device to receive the second signal is determined based on the resource location for the first device to receive the first signal and the reference time-domain offset in the second configuration information.

In the target paging frame, the resource locations for the second device to receive the second signal are sequentially determined based on the second period in the second search space configuration information. The resource locations for the second device to receive the second signal determined in this case are in units of symbols, that is, which specific symbol bit in the target paging frame is used for receiving the second signal.

In some embodiments, the method further includes:

in case that the second configuration information sent from the network device further includes a fourth duration associated with the first signal for receiving the second signal, determining the resource location for the second device to receive the second signal based on the second configuration information; and

determining the resource location for the second device to receive the second signal based on the second configuration information includes:

obtaining the first period in the first search space configuration information in the second configuration information;

within each first period, sequentially determining, based on the reference time-domain offset in the second configuration information, the resource location for the second device to receive the second signal; and

determining, based on the fourth duration and the reference time-domain offset in the second configuration information and a resource location for receiving a target second signal, a resource location for the first device to receive at least one first signal;

where the fourth duration is an integer multiple of a discontinuous reception cycle or paging cycle for receiving the second signal.

In an embodiment, in addition to determining the resource location for the second device to receive the second signal based on the second configuration information and the resource location for receiving the first signal, the resource location for the second device to receive the second signal may also be firstly and directly determined based on the second configuration information. Then, the resource location for receiving the first signal is determined based on the time-domain offset between the resource location corresponding to the reference point and the resource location for receiving the second signal. As such, the first signal is received first at the resource location for receiving the first signal, and then the second signal is received at the resource location for receiving the second signal.

To achieve the direct determination of the resource location for the second device to receive the second signal based on the second configuration information, correspondingly, the second configuration information further needs to configure a fourth duration associated with the first signal for receiving the second signal, where the fourth duration is an integer multiple of the paging cycle for receiving the second signal.

In case that the second configuration information includes the fourth duration associated with the first signal for receiving the second signal, the first period for receiving the second signal in the first search space configuration information in the second configuration information is obtained;

within each first period, resource locations for receiving the second signal are sequentially determined based on the time-domain offset in the second configuration information;
based on the fourth duration and the time-domain offset in the second configuration information, and the resource locations for receiving the target second signal, all resource locations for the first device to receive the first signal are determined; correspondingly, when the network device sends the second signal, it will also select one or more resource locations that satisfy reception capability information reported by the first device and/or the second device, and send the second signal to the second device.

In some embodiments, the method further includes:

receiving the first signal at the resource location for receiving the first signal; and
in case that the count of repeated transmissions or the maximum count of transmissions of the first signal included in the first configuration information is reached, no longer receiving the first signal.

In an embodiment, the first device receives the first signal at the resource location for receiving the first signal, and counts simultaneously whether an actual number of times of consecutive receptions of the first signal reaches the count of repeated transmissions or the maximum count of transmissions of the first signal configured in the first configuration information. If it reaches the count of repeated transmissions or the maximum count of transmissions of the first signal, the first device no longer receives the first signal. If it does not reach the count of repeated transmissions or the maximum count of transmissions of the first signal, the first device continues to receive the first signal until the count of repeated transmissions or the maximum count of transmissions of the first signal is reached.

In some embodiments, the method further includes:

receiving the second signal at the resource location for receiving the second signal; and
in case that the maximum count of receptions of the second signal included in the second configuration information is reached and the second signal is not received, the second device enters a sleep state.

In an embodiment, the second device receives the second signal at the resource location for receiving the second signal, and counts whether a number of consecutive times the second signal is not received reaches the preset maximum count of receptions. If it reaches the preset maximum count of receptions, the second device enters the sleep state again.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In an embodiment, the type of the first configuration information is any or more of the cell-specific configuration information, the UE-specific configuration information, or the UE group-specific configuration information. In case that the first configuration information is the cell-specific configuration information, all first devices within a same cell coverage area may use the first configuration information. In case that the first configuration information is the UE-specific configuration information, only specific first devices may receive the first configuration information, and the specific first devices are determined based on the UE-specific configuration information. In case that the first configuration information is the UE group-specific configuration information, only multiple specific first devices may receive the first configuration information, and the specific first devices may be determined by grouping first devices based on same capabilities. Regardless of whether the first configuration information is any or more of the cell-specific configuration information, the UE-specific configuration information, or the UE group-specific configuration information, it can be carried in the RRC signaling, the dynamic signaling, or the broadcast signaling, that is, it can be configured through the RRC signaling, the dynamic signaling, or the broadcast signaling. The dynamic signaling includes a downlink data signal or a downlink control signal. The downlink control signal may be a signal of a physical downlink control channel (PDCCH), and the downlink data signal may be a signal of the physical downlink shared channel (PDSCH). The broadcast signaling includes signaling of a system information block (SIB) and a physical broadcast channel (PBCH). The system information blocks (SIB) include various types, such as SIB1, SIB2, ..., SIB12, etc.

Similarly, the type of the second configuration information is also any or more of the three types: the cell-specific configuration information, the UE-specific configuration information, or the UE group-specific configuration information. The functions, effects, and configuration ways corresponding to different types are the same as those of the first configuration information, and are not repeated here.

In some embodiments, the first configuration information and/or the second configuration information is activated by a dynamic signaling, or the first configuration information and/or the second configuration information is deactivated by a dynamic signaling.

In an embodiment, the first configuration information and/or the second configuration information may also be activated by a dynamic signaling, or the first configuration information and/or the second configuration information may also be deactivated by a dynamic signaling. This may be understood as multiple sets of first configuration parameters being configured, and any or multiple sets of first configuration parameters among them may be activated or deactivated by a dynamic signaling. Similarly, multiple sets of second configuration parameters may also be configured, and any or multiple sets of second configuration parameters among them may be activated or deactivated by a dynamic signaling. In addition, a parameter or some parameters in the first configuration parameter may be activated or deactivated by a dynamic signaling. Similarly, a parameter or some parameters in the second configuration parameter may be activated or deactivated by a dynamic signaling.

In some embodiments, the method further includes:

determining, based on the type of the second signal in the second configuration information and the resource location for receiving the second signal, a type of a received second signal, where the type of the second signal includes a paging occasion or a paging early indication;
determining, based on third configuration information sent from the network device, whether paging early indication configuration information is configured, where the paging early indication configuration information is used to indicate a type of the second signal that the second device preferentially receives; and
in case that the paging early indication configuration information is configured, triggering the second device preferentially to receive a paging early indication at a resource location where the type of the second signal is the paging early indication, and determine, based on information carried by the paging early indication, whether to receive a paging message at a resource location of a paging occasion associated with the paging early indication; or
in case that the paging early indication configuration information is not configured, triggering the second device to receive a paging message at a resource location where the type of the second signal is the paging occasion.

In an embodiment, the type of the second signal is also configured in the second configuration information. Therefore, while determining the resource location for receiving the second signal, the type of the received second signal may also be determined. The type of the second signal includes the paging occasion and the paging early indication. That is, the type of the received second signal may be any or a combination of the paging occasion and the paging early indication.

In addition, the network device may further send the third configuration information. Based on the third configuration information, which type of second signal the second device preferentially receives is determined.

It is further determined whether the paging early indication configuration information is configured based on the third configuration information sent from the network device.

In case that the paging early indication configuration information is configured, that is, the network device indicates preferentially receiving a second signal with the type being the paging early indication, the second device is triggered to preferentially receive the paging early indication at the resource location where the type of the second signal is the paging early indication, and determine, based on the information carried by the paging early indication, whether to receive the paging message at the resource location of the paging occasion associated with the paging early indication.

In case that the paging early indication configuration information is not configured, the second device is triggered to directly receive the paging message at the resource location where the type of the second signal is the paging occasion.

Similarly, for the network device, in case that the paging early indication configuration information is configured in the third configuration information, the network device preferentially sends the paging early indication, carries the associated paging occasion in the paging early indication message, and sends the paging message to the second device at a corresponding paging occasion.

In case that the paging early indication configuration information is not configured in the third configuration information, the network device directly sends the paging message to the second device at the resource location of the paging occasion.

In some embodiments, the method further includes:

determining, based on the type of the second signal in the second configuration information and the resource location for receiving the second signal, a type of a received second signal, where the type of the second signal includes a paging occasion or a paging early indication;

determining, based on third configuration information sent from the network device, whether a skip parameter is configured and/or whether a configured skip parameter is activated, where the skip parameter is used to indicate whether to skip a paging early indication occasion and/or to indicate a type of the second signal that the second device preferentially receives; and

in case that the skip parameter is configured and/or the configured skip parameter is activated, triggering the second device to receive a paging message at a resource location where the type of the second signal is the paging occasion; or

in case that the skip parameter is not configured and/or the configured skip parameter is not activated, triggering the second device to preferentially receive a paging early indication at a resource location where the type of the second signal is the paging early indication, and determine, based on information carried by the paging early indication, whether to receive a paging message at a resource location of a paging occasion associated with the paging early indication.

In an embodiment, the type of the second signal is also configured in the second configuration information. Therefore, while determining the resource location for receiving the second signal, the type of the received second signal may also be determined. The type of the second signal includes the paging occasion and the paging early indication. That is, the type of the received second signal may be any or a combination of the paging occasion and the paging early indication.

In addition, the network device may further send the third configuration information to the second device. The second device determines which type of second signal to receive preferentially based on the third configuration information.

It is further determined, based on the third configuration information sent from the network device, whether the skip parameter is configured, and/or whether the configured skip parameter is activated. There are three cases as follows.

Case 1: whether the skip parameter is configured

In case that the skip parameter is configured, it indicates that the skip parameter is valid. This skip parameter is used to indicate whether to skip the paging early indication occasion. That is, the skip parameter being configured indicates that the paging early indication occasion needs to be skipped, and the skip parameter not being configured indicates that the paging early indication occasion does not need to be skipped.

Case 2: whether the skip parameter is configured and whether the configured skip parameter is activated

In case that the skip parameter is configured, it only indicates that the configuration item exists, not that the parameter is valid. It is necessary to determine whether the parameter is valid by determining whether the configured skip parameter is activated. That is, the skip parameter being configured indicates that the network side or terminal side has this capability, but whether it is valid requires further determination of whether the skip parameter is activated. In case that the skip parameter is configured and activated, it indicates that the paging early indication occasion needs to be skipped. In case that the skip parameter is configured but not activated, it indicates that the paging early indication occasion does not need to be skipped.

Case 3: whether the configured skip parameter is activated

Similar to case 2, the configured skip parameter being activated means that the skip parameter is configured and activated; the configured skip parameter not being activated means that the skip parameter is configured but not activated. As for the corresponding functions and effects, reference may be made to the description in Case 2. The configured skip parameter may be activated or deactivated through a dynamic signaling.

In addition, in case that the skip parameter is configured, the configured skip parameter is activated, or the skip parameter is configured and activated, the second device receives a paging message at a resource location where the type of the second signal is the paging occasion.

Conversely, in case that the skip parameter is not configured, or the configured skip parameter is not activated, the second device preferentially receives a paging early indication at a resource location where the type of the second signal is the paging early indication, and then determines, based on the information carried by the paging early indication, whether to receive a paging message at a resource location of a paging occasion associated with the paging early indication.

In some embodiments, the third configuration information includes one or more of:

paging early indication configuration information, used to indicate the type of the second signal that the second device preferentially receives; or

a skip parameter, used to indicate whether to skip a paging early indication occasion, and/or used to indicate the type of the second signal that the second device preferentially receives.

In an embodiment, the third configuration information is determined by the network device based on reported reception capability information. That is, the third configuration information is determined based on the version information of the communication standard that the second device supports included in the above-mentioned reception capability information. The third configuration information includes one or more of the paging early indication configuration information or the skip parameter.

The paging early indication configuration information is used to indicate the type of the second signal that the second device preferentially receives.

The skip parameter is used to indicate whether to skip the paging early indication occasion, and/or used to indicate the type of the second signal that the second device preferentially receives. There are several cases for the configuration of this parameter, as follows.

Case 1: the skip parameter being configured indicates that the parameter is valid. That is, the skip parameter is used to indicate the type of the second signal that the second device preferentially receives or to indicate skipping the paging early indication occasion. The skip parameter not being configured indicates that the parameter is invalid. That is, the second device receives the second signal based on an existing procedure, or it is indicated that not to skip the paging early indication occasion.

Case 2: the skip parameter being configured does not indicates that the parameter is valid. The configured skip parameter needs to be activated so as to be valid. Activating the configured skip parameter may be performed through an indication bit included in the skip parameter or through a dynamic signaling. That is, whether the configured skip parameter is activated may be indicated by the indication bit being 0 or 1. Alternatively, the configured skip parameter is activated or deactivated through a dynamic signaling.

In the method for determining low power access or transmission provided by the embodiments of the present application, through first configuration information and second configuration information configured by a network device, a resource location of a first signal determined based on the first configuration information, and a resource location of a second signal dynamically determined based on the second configuration information, a delay of a second device waiting for the second signal after being woken up is reduced, and energy consumption of the second device while waiting for the second signal is reduced simultaneously.

FIG. 2 is a second schematic flowchart of a method for determining low power access or transmission according to an embodiment of the present application. As shown in FIG. 2, the method includes:

step 201: determine, based on obtained reception capability information or a service requirement, first configuration information and/or second configuration information;

where the reception capability information includes one or more of:

a type of a receiver of a first device;

a sensitivity of a receiver of a first device;

a transition delay of a second device from an ultra-deep sleep state to an active state; or

version information of a communication standard that a second device supports; and

the service requirement includes one or more of: a paging requirement, a data transmission requirement, or a signal transmission requirement.

In an embodiment, the network device may determine the first configuration information and/or the second configuration information based on the reception capability information reported from the first device and/or the second device, or the service requirement.

There is an association or connection relationship between the first device and the second device. The first device and the second device may know the reception capability information of each other. That is, the first device may know the reception capability information of the second device and report it to the network device in combination with the reception capability information of the first device; or, the second device may know the reception capability information of the first device and report it to the network device in combination with the reception capability information of the second device; or, the first device reports its own reception capability information to the network device, and the second device reports its own reception capability information to the network device, and there is an association relationship between the first device and the second device.

The reported reception capability information that the network device may know includes one or more of: the type of the receiver of the first device, the sensitivity of the receiver of the first device, the transition delay of the second device from the ultra-deep sleep state to the active state, or the version information of the communication standard that the second device supports.

In an embodiment, the first configuration information and/or the second configuration information is determined based on the service requirement, which includes any of the paging requirement, the data transmission requirement, or the signal transmission requirement.

In the method for determining low power access or transmission provided by the embodiments of the present application, through reported reception capability information or a service requirement, the network device flexibly determines first configuration information and/or second configuration information, which is used for a first device to determine a resource location of a first signal based on the first configuration information, and/or for a second device to dynamically determine a resource location of a second signal based on the second configuration information. A delay of the second device waiting for the second signal after being woken up is reduced, and energy consumption of the second device while waiting for the second signal is reduced simultaneously.

In some embodiments, determining, based on the obtained reception capability information or the service requirement, the first configuration information and/or the second configuration information includes:

in case that the reception capability information reported from a target device is received, determining, based on the reception capability information reported from the target device, the first configuration information and/or the second configuration information to be sent to the target device; or,

in case that the reception capability information reported from a target device is not received, determining, based on the service requirement, the first configuration information and/or the second configuration information;

where the target device is at least one of all first devices and/or all second devices within a coverage area of a network device.

In an embodiment, there are multiple first devices and/or second devices within the coverage area of the network device, and there is an association relationship between the first devices and the second devices. Any first device or any second device within the coverage area of the network device may be the target device.

In case that the network device receives reception capability information reported from the target device, the network device determines the first configuration information and/or the second configuration information to be sent to the target device based on the reported reception capability information. For example, after the first device knows of the reception capability information of the second device associated with the first device, the reception capability information reported by the first device includes its own reception capability information and the reception capability information of the second device. The network device determines the first configuration information and the second configuration information based on this reception capability information. Alternatively, the first device reports its own reception capability information, or the second device reports its own reception capability information, and the reception capability information received by the network device only includes the reception capability information of the first device or the reception capability information of the second device. As such, the network device determines the first configuration information based on the reception capability information of the first device, or determines the second configuration information based on the reception capability information of the second device.

In case that the network device does not receive the reception capability information reported from the target device, the network device determines the first configuration information and the second configuration information based on the service requirement, such as the paging requirement, the data transmission requirement, and the signal transmission requirement.

In some embodiments, determining, based on the reception capability information reported from the target device, the first configuration information and/or the second configuration information to be sent to the target device includes:

determining, based on the type of the receiver of the first device and/or the sensitivity of the receiver of the first device included in the reception capability information, the first configuration information to be sent to the first device, where the first configuration information is used for the first device to determine a resource location for receiving a first signal, and the first signal is used to instruct the first device to wake up a second device; and

determining, based on the transition delay of the second device from the ultra-deep sleep state to the active state included in the reception capability information, the second configuration information to be sent to the second device, where the second configuration information is used for the second device to determine a resource location for receiving a second signal.

In an embodiment, in case that the received reception capability information includes the type of the receiver of the first device and/or the sensitivity of the receiver of the first device, the network device determines the first configuration information to be sent to the first device based on the reception capability information. After the first configuration information is sent to the first device, the first device determines the resource location for receiving the first signal based on the first configuration information, and the first signal instruct the first device to wake up the second device.

In case that the received reception capability information includes the transition delay of the second device from the ultra-deep sleep state to the active state, the network device determines the second configuration information to be sent to the second device based on the reception capability information. The second device determines the resource location for receiving the second signal based on the second configuration information.

The first device and the second device have an association relationship.

In some embodiments, the first configuration information includes one or more of:

a time-domain location of a first signal;

a frequency-domain location or a frequency-domain synchronization raster of a first signal;

a symbol length occupied by a first signal;

a mapping way of a first signal in a time-frequency resource;

a count of repeated transmissions or a maximum count of transmissions of a first signal;

a number of second devices associated with a first signal;

a number of second device groups associated with a first signal; or

a number of resource locations of a second signal associated with a first signal.

In an embodiment, the first configuration information mentioned above is determined by the network device, and is used to configure related parameters for receiving the first signal, including one or more of the following:

the time-domain location of the first signal, indicating multiple specific locations where the first signal is distributed in the time domain, which may be a periodic distribution, or a non-periodic distribution based on multiple specific locations configured by this parameter; a specific start distribution location, a specific end distribution location, a specific duration, etc., of the first signal in the time domain of each period may also be configured; this may be understood as performing segment transmission of the first signal within one period, or performing repeated transmission of the first signal within one period, etc.;

the frequency-domain location of the first signal, indicating multiple specific locations where the first signal is distributed in the frequency domain, which may be a periodic distribution, or a non-periodic distribution based on multiple specific locations configured by this parameter; a specific start distribution location, a specific end distribution location, a specific first bandwidth, etc., of the first signal in the frequency domain of each period may also be configured; this may be understood as performing, through multiple frequency bands, parallel transmission of the first signal within one period, or performing, through multiple frequency bands, repeated transmission of the first signal within one period, etc.;

the frequency-domain synchronization raster of the first signal and the frequency-domain location of the first signal play a same role, only differing in representation; the frequency-domain synchronization raster represents a center frequency and a corresponding bandwidth of a distribution of the first signal;

the symbol length occupied by the first signal, representing a total number of symbols occupied by a physical resource unit occupied by one signal;

the mapping way of the first signal in the time-frequency resource, representing a mapping relationship between each first signal and the time-frequency resource;

the count of repeated transmissions or a maximum count of transmissions of the first signal, representing the count of repeated transmissions the network device sends the first signal, or the maximum count of transmissions the network device sends the first signal; this may be understood as the count of repeated transmissions the network device may send the first signal or the maximum count of transmissions the network device may send the first signal; after reaching the count of repeated transmissions or the maximum count of transmissions, the network side no longer sends the first signal;

the number of second devices associated with the first signal, which is mainly used to configure how many second devices are associated with the first device; through this configuration information, it may be determined how many second devices the first device receiving the first signal wakes up; the specific second devices to be woken up are determined based on identifiers of the second devices associated with the first device; for the first device, its associated second devices are already configured;

the number of second device groups associated with the first signal, which is mainly used to configure how many second device groups are associated with the first device; through this configuration information, it may be determined how many second device groups the first device receiving the first signal wakes up; the specific second device groups to be woken up are determined based on identifiers of the second devices associated with the first device; for the first device, its associated second device groups are already configured; in addition, the number of second devices associated with the first signal and the number of second device groups associated with the first signal may be used jointly to configure which second device(s) in which second device groups the first device is associated with; or

the number of resource locations of the second signal associated with the first signal; the first signal may wake up a second device and/or a second device group on the resource of the associated second signal.

Through the above-mentioned first configuration information, a resource location where a first device receives a first signal may be dynamically determined through various configuration parameters, which is more flexible than a traditional fixed configuration.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In an embodiment, the time-domain location of the first signal may be represented by one or more parameters of the reception period of the first signal, the time-domain start reception location of the first signal within one reception period, the time-domain end reception location of the first signal within one reception period, or the first duration of the first signal within one reception period. In the time domain, the time-domain start reception location within one reception period may be represented as a time-domain start reception moment within one reception period, the time-domain end reception location within one reception period may be represented as a time-domain end reception moment within one reception period, the first duration within one reception period may be represented as a duration of receiving the first signal within one reception period, and the this duration is generally less than the reception period of the first signal.

The frequency-domain location of the first signal may be represented by one or more parameters of the reception period of the first signal, the frequency-domain start reception location of the first signal within one reception period, the frequency-domain end reception location of the first signal within one reception period, or the frequency-domain first bandwidth of the first signal within one reception period. In the frequency domain, the frequency-domain start reception location within one reception period may be represented as a frequency-domain start reception frequency within one reception period, the frequency-domain end reception location within one reception period may be represented as a frequency-domain end reception frequency within one reception period, the frequency-domain first bandwidth within one reception period may be represented as a frequency range of receiving the first signal within one reception period.

In some embodiments, the second configuration information includes one of more of:

a reference time-domain offset, used to represent a time-domain offset between a resource location corresponding to a reference point and a resource location for a second device to receive a second signal, where the resource location corresponding to the reference point is a resource location for a first device to receive a first one of first signals or a resource location for a first device to receive a last one of first signals;

first search space configuration information, used to configure a first period for receiving a second signal, a start reception location offset and a second duration within a single first period, and a type of the second signal;

second search space configuration information, used to configure a second period for receiving a second signal, a start reception location offset and a third duration within a single second period, and a type of the second signal;

reception window configuration information, used to configure any or a combination of a start moment of a reception window, a duration of a reception window, or an end moment of a reception window, where the reception window is used to receive a second signal; or

a count or a maximum count of receptions of the second signal.

In an embodiment, the second configuration information may be configured through one or more of the following parameters:

the time-domain offset between the resource location corresponding to the reference point and the resource location for receiving the second signal, where the resource location corresponding to the reference point is the resource location for receiving the first one of first signals, or the resource location for receiving the last one of first signals; the first search space configuration information, which is existing search space configuration information, used to configure the first period for receiving the second signal, the start reception location offset and the second duration within a single first period, and the type of the second signal; the second search space configuration information, which is additional search space configuration information; distinguishing from the first search space configuration information, the name of the second search space configuration information is different from the name of the first search space configuration information; in addition, values of some configuration parameters in the second search space configuration information are different from values of the same configuration parameters in the first search space configuration information; the configuration parameters of the second search space configuration information are used to configure the second period for receiving the second signal, the start reception location offset and the third duration within a single second period, and the type of the second signal; the configuration parameters of the second search space configuration information may also configure an aggregation level, a start reception symbol with finer granularity for receiving the second signal, etc.; the reception window configuration information, used to configure any or a combination of the start moment of the reception window, the duration of the reception window, or the end moment of the reception window, where the reception window is used to receive the second signal; that is, a time window for receiving the second signal is configured; different from the first search space configuration information or the second search space configuration information, this reception window configuration information is not periodic; in an embodiment, a specific duration of the reception window may be determined by configuring the start moment and the end moment of the reception window, or the start moment and the duration of the reception window, or the duration and the end moment of the reception window; the duration of the reception window may be expressed in different time units; the maximum count of receptions of the second signal; this parameter is configured in the second configuration information to prevent the second device from remaining in a wake-up state and waiting to receive the second signal sent from the network device, which has high power consumption; or the count of receptions of the second signal, which is mainly used to configure a fixed count for the second device to receive the second signal; that is, after a count of consecutive receptions of the second signal reaches this value, the second device no longer receives the second signal.

In some embodiments, the duration of the reception window is multiple unit durations determined in a unit of a system frame, a slot, a symbol, or a paging cycle.

In an embodiment, the duration of the reception window may be in the unit of a system frame, a slot, a symbol, or a paging cycle, and may be multiple system frames, multiple slots, multiple symbols, or multiple paging cycles.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In an embodiment, the type of the first configuration information is one or more of the cell-specific configuration information, the UE-specific configuration information, or the UE group-specific configuration information. In case that the first configuration information is the cell-specific configuration information, all first devices within a same cell coverage area may use the first configuration information. In case that the first configuration information is the UE-specific configuration information, only specific first devices may receive the first configuration information, and the specific first devices are determined based on the UE-specific configuration information. In case that the first configuration information is the UE group-specific configuration information, only multiple specific first devices may receive the first configuration information, and the specific first devices may be determined by grouping first devices based on same capabilities. Regardless of whether the first configuration information is any or more of the cell-specific configuration information, the UE-specific configuration information, or the UE group-specific configuration information, it can be carried in the RRC signaling, the dynamic signaling, or the broadcast signaling, that is, it can be configured through the RRC signaling, the dynamic signaling, or the broadcast signaling. The dynamic signaling includes a downlink data signal or a downlink control signal. The downlink control signal may be a signal of a physical downlink control channel (PDCCH), and the downlink data signal may be a signal of the physical downlink shared channel (PDSCH). The broadcast signaling includes signaling of a system information block (SIB) and a physical broadcast channel (PBCH). The system information blocks (SIB) include various types, such as SIB1, SIB2, ..., SIB12, etc.

In some embodiments, the method further includes:

sending a dynamic signaling to a first device and/or a second device;
where the dynamic signaling is used to activate the first configuration information and/or the second configuration information, or the dynamic signaling is used to deactivate the first configuration information and/or the second configuration information.

In an embodiment, the network device may send the dynamic signaling to the first device and/or the second device, where the dynamic signaling is used to activate the first configuration information and/or the second configuration information, or the dynamic signaling is used to deactivate the first configuration information and/or the second configuration information.

In some embodiments, the method further includes:

determining, based on the version information of the communication standard that the second device supports included in the reception capability information, third configuration information, where the third configuration information is used to configure a type of a second signal that the second device preferentially receives, and the type of the second signal includes a paging early indication or a paging occasion; and
sending the third configuration information to the first device and/or the second device.

In an embodiment, the network device receives the reception capability information reported from the first device and/or the second device, and determines the third configuration information. The third configuration information configures the type of the second signal that the second device preferentially receives. The type of second signal includes the paging early indication and the paging occasion. That is, the second device is configured to preferentially receive the paging early indication or the paging occasion. The determined third configuration information is sent to the first device and/or the second device.

In some embodiments, the third configuration information includes one or more of:

paging early indication configuration information, used to indicate the type of the second signal that the second device preferentially receives; or
a skip parameter, used to indicate whether to skip a paging early indication occasion, and/or used to indicate the type of the second signal that the second device preferentially receives.

In an embodiment, the third configuration information is determined by the network device based on obtained reception capability information. That is, the third configuration information is determined based on the version information of the communication standard that the second device supports included in the above-mentioned reception capability information. The third configuration information includes one or more of the paging early indication configuration information or the skip parameter.

The paging early indication configuration information is used to indicate the type of the second signal that the second device preferentially receives.

The skip parameter is used to indicate whether to skip the paging early indication occasion, and/or used to indicate the type of the second signal that the second device preferentially receives. There are several cases for the configuration of this parameter, as follows.

Case 1: the skip parameter being configured indicates that the parameter is valid. That is, the skip parameter is used to indicate the type of the second signal that the second device preferentially receives or to indicate skipping the paging early indication occasion. The skip parameter not being configured indicates that the parameter is invalid. That is, the second device receives the second signal based on an existing procedure, or it is indicated that not to skip the paging early indication occasion.

Case 2: the skip parameter being configured does not indicates that the parameter is valid. The configured skip parameter needs to be activated for it to be valid. Activating the configured skip parameter may be performed through an indication bit included in the skip parameter or through a dynamic signaling. That is, whether the configured skip parameter is activated may be indicated by the indication bit being 0 or 1. Alternatively, the configured skip parameter is activated or deactivated through a dynamic signaling.

In the method for determining low power access or transmission provided by the embodiments of the present application, through reported reception capability information or a service requirement, the network device flexibly determines first configuration information and/or second configuration information, which is used for a first device to determine a resource location of a first signal based on the first configuration information, and/or for a second device to dynamically determine a resource location of a second signal based on the second configuration information. A delay of the second device waiting for the second signal after being woken up is reduced, and energy consumption of the second device while waiting for the second signal is reduced simultaneously.

To illustrate the method for determining low power access or transmission provided by the embodiments of the present application more clearly, the solutions of the embodiments of the present application are further described below through several specific examples.

Initial state: the first device is in the ultra-deep sleep state, and the second device is in the sleep state.

Example 1: a resource location for receiving a second signal is determined through reception window configuration information in second configuration information.

Step 1: a base station side configures first configuration information and the second configuration information. The first configuration information is used to determine a resource location for sending a first signal (LP-WUS signal) and a resource location for receiving a first signal (LP-WUS signal), and the second configuration information is used to determine a resource location for sending a second signal (paging occasion/paging early indication occasion, that is, PO/PEI-O) and a resource location for receiving a second signal (PO/PEI-O).

1.1 The first configuration information and the second configuration information may be UE (group)-specific configuration information or cell-specific configuration information based on a receiver capability reported from the first device and/or the second device; the first configuration information and the second configuration information may also be cell-specific configuration information for all receiver capabilities determined based on a service requirement.

The first device includes a low power wake-up receiver (LP-WUR), and the second device includes a main radio (MR).

The reception capability of receiver reported by the first device and/or the second device includes at least one of the following:

a type of a receiver of the LP-WUR, such as RF-based, and baseband-based;
an extremely low-power state transition time of the MR, such as 400ms, and 800ms;
a sensitivity of a receiver of the LP-WUR, in a unit of dBm; or
version information of a communication standard that the MR supports, such as Rel17, Rel18, etc.

A type of the first configuration information includes the UE (group)-specific configuration information or the cell-specific configuration information, and a type of the second configuration information includes the UE (group)-specific configuration information or the cell-specific configuration information.

The cell-specific configuration information may be configured through any or more of an RRC signaling, a dynamic signaling, or a broadcast signaling, where the dynamic signaling includes a PDCCH, a PDSCH, etc., and the broadcast signaling includes an SIB X, a PBCH, etc. In addition, the dynamic signaling may be used to activate a certain piece of cell-specific configuration information or certain pieces of cell-specific configuration information, or deactivate a certain piece of cell-specific configuration information or certain pieces of cell-specific configuration information.

Similarly, the UE group-specific configuration information and the cell-specific configuration information may both be configured through any or more of an RRC signaling, a dynamic signaling, or a broadcast signaling, and may be activated and/or deactivated through a dynamic signaling.

1.2 The first configuration information is used to determine the reception of the first signal (LP-WUS), and the LP-WUS is a dedicated signal received by the LP-WUS included in the first device. The first configuration information may include one or more of:

a reception period of the first signal in a time domain and/or a frequency domain;
a start reception location, a duration, and an end reception location of the first signal within a period;
a symbol length occupied by the first signal;
a count of repeated transmissions/a maximum count of transmissions of the first signal;
a frequency-domain location or a frequency-domain synchronization raster of the first signal;
a number of second devices associated with the first signal;
a number of second device groups associated with the first signal; or
a number of resource locations of a second signal associated with the first signal.

1.3 The second configuration information is used to determine the reception of the second signal, and the second signal is a dedicated signal received by the second device. The second signal includes a PO/PEI-O, and the second configuration information may include at least one of:

1) existing search space (SS) configuration information, used to configure a period, a start reception location offset, and a duration of receiving the second signal;

2) a new SS configuration information, used to configure a period, a start reception location offset, and a duration of receiving the second signal; a main difference between the new SS configuration information and the existing SS configuration parameters is the name, for example, the existing SS configuration information is named as PO-SS or PEI-SS, and the new SS configuration information is named PO-SS-Rel-18 or PEI-SS-Rel-18;

3) a first reception window configuration parameter: the second signal is received within a first reception window, and the second signal is not received outside the first reception window; a related configuration parameter may include at least one of the following:

a start moment of the first reception window, which may be based on a time-domain offset LP-WUS_offset between a resource location for receiving a first one of the first signals or a last one of the first signals and a resource location for receiving the second signal;

a duration of the first reception window, which may be M1 frames, M1 slots, M1 symbols, or N paging cycles, where M1 is a positive integer and may be pre-configured through an RRC, and N is a positive integer and may be determined through a maximum count of paging receptions pre-configured by an RRC or predefined by a protocol; or

an end moment of the first reception window, which may be a specific frame, slot, or symbol;

4) a time-domain offset LP-WUS_offset between a resource location for receiving a first one of the first signals or a last one of the first signals and a resource location for receiving the second signal; or

5) a count or a maximum count of receptions of the second signal.

Step 2: the base station side sends a first signal (LP-WUS) carrying wake-up information based on a paging requirement, instructing the first device to wake up the second device to enable the second device to be in a state that the second device may receive paging information and/or a PEI, and determines a first reception window for receiving the second signal based on the second configuration information.

Step 3: after receiving the first signal (LP-WUS) carrying the wake-up information, the first device (LP-WUS) wakes up the second device (MR). The second device determines the start location of the first reception window based on a reception location of the first signal (LP-WUS), determines a resource location for receiving the second signal (PO/PEI) within the first reception window, and receives the second signal.

3.1 The second device determines the resource location of the first reception window based on the reception location of the first signal:

a first reception location and/or a last reception location of the first signal is a resource location of a reference point, and a resource location with a resource location offset LP-WUS_offset from the reference point is used as the start location of the first window; and

a duration and an end location of the first reception window are then determined based on configuration parameters of the first reception window in the second configuration information and the start location of the first window.

3.2 Within the first receiving window, the second device determines the resource location for receiving the second signal based on the existing SS configuration information and/or the new SS configuration information in the second configuration information, as shown in FIG. 3, which is a schematic diagram of a distribution of resource locations for receiving a second signal in a reception window according to an embodiment of the present application.

Step 4: the type of the second signal to be received preferentially is determined based on the third configuration information.

Based on the type of the second signal configured in the second configuration information and the resource location for receiving the second signal determined in the above steps, the type of the second signal received at the resource location for receiving the second signal may be determined, and the type of the second signal includes a paging occasion and a paging early indication.

It is determined whether a paging early indication configuration information is configured in the third configuration information based on the third configuration information sent from the network device.

In case that the paging early indication configuration information is configured, the second device is triggered to preferentially receive a paging early indication at a resource location where the type of the second signal is the paging early indication, and determine whether to receive a paging message at a resource location of a paging occasion associated with the paging early indication based on the information carried by the paging early indication.

In case that the paging early indication configuration information is not configured, the second device is triggered to receive a paging message at a resource location where the type of the second signal is the paging occasion.

Alternatively, based on the third configuration information sent by the network device, it is determined whether a skip parameter PEI_skip_enable is configured in the third configuration information, and/or whether a configured skip parameter PEI_skip_enable is activated.

There are two cases as follows.

Case 1: whether a skip parameter is configured indicates whether the skip parameter is valid. For example, in case that a skip parameter is configured, it indicates that the skip parameter is activated; and in case that a skip parameter is not configured, it indicates that the skip parameter is not activated.

Case 2: whether a skip parameter is configured does not indicate whether the skip parameter is valid. In case that a skip parameter is configured, the configured skip parameter also needs to be activated to determine that the skip parameter is valid.

If a skip parameter is configured, it indicates that the skip parameter is valid; or, if a skip parameter is configured and the configured skip parameter is activated, it also indicates that the skip parameter is valid; or, if a configured skip parameter is activated, it is equivalent to the situation where a skip parameter is configured and the configured skip parameter is activated. In this situation, the second device receives the paging message at the resource location where the type of the second signal is the paging occasion.

If a skip parameter is not configured, it indicates that the skip parameter is not valid; or, if a skip parameter is configured and the configured skip parameter is not activated, it also indicates that the skip parameter is not valid; or, if a configured skip parameter is not activated, it is equivalent to the situation where a skip parameter is configured and the configured skip parameter is not activated. In this situation, the second device preferentially receives a paging early indication at the resource location where the type of the second signal is the paging early indication, and then determines whether to receive a paging message at the resource location of the paging occasion associated with the paging early indication based on the information carried by the paging early indication.

Example 2: a resource location for a second device to receive a second signal is determined based on second configuration information and a resource location for receiving a first signal.

Step 1: a base station side configures first configuration information and the second configuration information. The first configuration information is used to determine a resource location for sending a first signal (LP-WUS signal) and a resource location for receiving a first signal (LP-WUS signal), and the second configuration information is used to determine a resource location for sending a second signal (PO/PEI-O) and a resource location for receiving a second signal (PO/PEI-O).

Step 2: the base station side sends a first signal (LP-WUS) carrying wake-up information according to a paging requirement, instructing the first device to wake up the second device. The second device is in a state where it can receive the second signal. A time-domain offset between the resource location for sending the second signal and the resource location for sending the first signal is LP-WUS_offset.

Step 3: the second device determines the resource location for receiving the second signal (PEI and/or PO) based on the resource location for receiving the first signal. One of the following ways may be used.

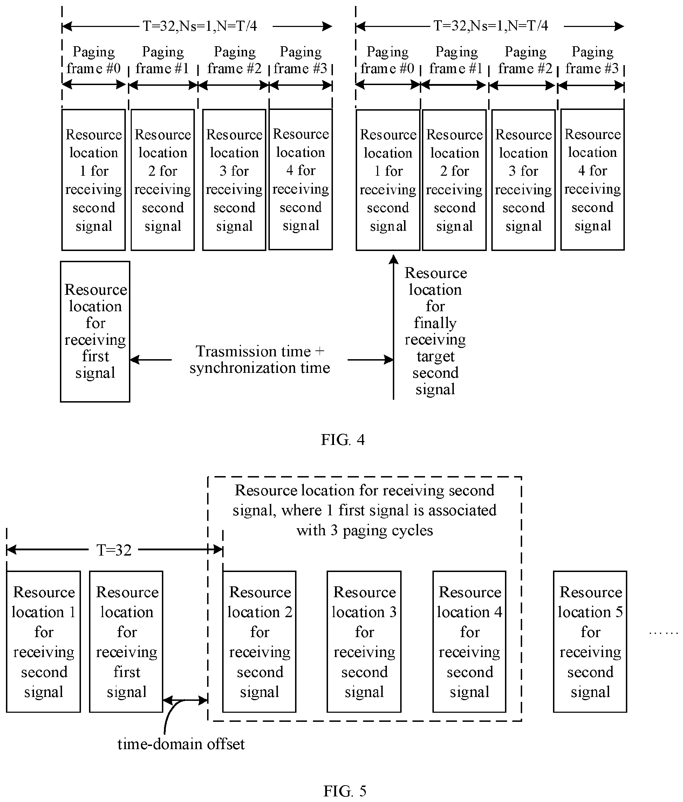

Way 1: the second device determines the resource location for receiving the second signal based on the resource location for receiving the first signal and new search space configuration information in the second configuration information, as shown in FIG. 4, which is a first schematic diagram of a distribution of resource locations for receiving a first signal and a second signal according to an embodiment of the present application.

A start system frame (start paging frame) for receiving the second signal is first determined, and then a symbol location for receiving the second signal is determined in the start paging frame, including:

based on a received SIB1 message, one or more of the following are obtained: a discontinuous reception cycle or a paging cycle T, a number N of paging frames within a paging cycle, or a total number Ns of paging occasions in a single paging frame;

a time-domain offset in the second configuration information is obtained, that is, a time-domain offset between a resource location of a reference point and the resource location for receiving the second signal is obtained, where the resource location of the reference point is a resource location where the first device receives a first one of the first signals or a resource location where the first device receives a last one of the first signals;

a system frame where a resource location corresponding to the reference point is located is determined;

a first input parameter is determined as any or more of the following: the discontinuous reception cycle or the paging cycle T, the number N of paging frames within a paging cycle, the system frame where the resource location corresponding to the reference point is located, or the time-domain offset in the second configuration information;

based on a first rule and the first input parameter, a system frame where a start resource location for receiving the second signal is located is determined as a target paging frame; a system frame where a paging occasion is located is a paging frame; the system frame where the start resource location for receiving the second signal is located is determined correspondingly, namely the target paging frame; the first rule is used to define a corresponding relationship between different input parameters and the system frame where the start resource location for receiving the second signal is located;

in the target paging frame, based on an index calculation rule and a second input parameter, a target index value corresponding to a symbol location for receiving the second signal is determined; the second input parameter includes one or more of an identifier of the second device, a number N of paging frames in the paging cycle, or a total number Ns of paging occasions in a single paging frame; the index calculation rule is used to define a relationship between different input parameters and the index value corresponding to a symbol location for receiving the second signal; and a paging occasion matching the target index value is determined based on a start reception symbol location set firstPDCCH-MonitoringOccasionOfPO configured in SIB1, and the paging occasion is used as the resource location for receiving the second signal.

In some embodiments, the first rule satisfies the formula:

$$(\text{LP-WUS\_SFN} + \text{LP-WUS\_offset} + \text{SFN}) \bmod T = T \operatorname{div} N,$$

where LP-WUS_SFN represents a system frame (SFN) where the resource location of the reference point is located, and the resource location of the reference point is a resource location for receiving the first/last one of the first signals; LP-WUS_offset represents a time-domain offset between the resource location corresponding to the reference point and the resource location where the second device receives the second signal, and is configured through the second configuration information;
SFN represents a paging frame where the start resource location for receiving the second signal is located;
T represents a discontinuous reception (DRX) cycle, an enhanced discontinuous reception cycle (eDRX), or a paging cycle, which may be configured through any or more of an SIB1 message, an RRC signaling, and an NAS signaling;
N represents a number of paging frames within the paging cycle, and is configured through an SIB 1 message.

In some embodiments, a formula corresponding to the index calculation rule is:

i_s = floor (UE_ID/N) mod Ns;
where UE_ID represents the identifier of the second device, N represents the number of paging frames within the paging cycle, floor() represents rounding down, mod() represents modulo, Ns is a number of paging occasion in a single paging frame, and i_s represents a target index value corresponding to the symbol location for receiving the second signal.

A start reception location of a paging early indication (PEI) associated with the paging occasion (PO) is determined by configuration parameters pei-FrameOffset and firstPDCCH-MonitoringOccasionOfPEI-O in an existing SIB1 message.
Way 2: in case that the SIB1 message is not received, the resource location for receiving the second signal is determined based on a new search space configuration information in the second configuration information and the resource location for receiving the first signal.
There is a time-domain offset LP-WUS_offset between the start resource location for receiving the second signal and the resource location for receiving the first/last one of the first signals, where a unit of LP-WUS_offset may be a frame/slot/symbol.
The system frame where the resource location for receiving the first signal is located is determined as a first system frame.
In the first system frame, the resource location for receiving the second signal is determined sequentially based on the second period configured in the second search space configuration information in the second configuration information, and the time-domain offset in the second configuration information.
The second search space configuration information is mainly used to periodically determine a slot location for receiving the second signal or a symbol location for receiving the second signal in a single system frame. Whether it is a slot location or a symbol location is determined based on a granularity of the resource location for receiving the first signal. In case that the resource location for receiving the first signal is in units of slots, the resource location for receiving the second signal is also in units of slots; in case that the resource location for receiving the first signal is in units of symbols, the resource location for receiving the second signal is also in units of symbols. As such, the resource location for receiving the second signal is determined.
Step 4: the type of the second signal to be received preferentially is determined based on the third configuration information; the specific implementation procedure is the same as that in Example 1, and is not repeated here.
Example 3: in case that a fourth duration, associated with a first signal, for receiving a second signal is also configured in second configuration information, a resource location for receiving the second signal is determined directly based on the second configuration information.

Step 1: a base station side configures first configuration information and the second configuration information. The first configuration information is used to determine a resource location for sending a first signal (LP-WUS signal) and a resource location for receiving a first signal (LP-WUS signal), and the second configuration information is used to determine a resource location for sending a second signal (PO/PEI-O) and a resource location for receiving a second signal (PO/PEI-O).

Step 2: the base station side sends a first signal (LP-WUS) carrying wake-up information according to a paging requirement, instructing the first device to wake up the second device. The second device is in a state where it can receive the second signal. A time-domain offset between the resource location for sending the second signal and the resource location for sending the first signal is LP-WUS_offset.

Step 3: a resource location for receiving the second signal is firstly determined based on first search space configuration information in the second configuration information, and a resource location for receiving the first signal is then determined based on the fourth duration associated with the first signal for receiving the second signal, including:

a first period of the first search space configuration information in the second configuration information is obtained; within each first period, starting from a start moment of each period, the resource location for receiving the second signal is sequentially determined based on a time-domain offset in the second configuration information; and based on the fourth duration and the time-domain offset in the second configuration information, and the resource location for receiving a target second signal, resource locations for receiving all the first signals are determined, as shown in FIG. 5, which is a second schematic diagram of a distribution of resource locations for receiving a first signal and a second signal according to an embodiment of the present application.

A type of the above-mentioned first configuration information includes one or more of cell-specific configuration information, UE-specific configuration information, or UE group-specific configuration information. A type of the above-mentioned second configuration information includes one or more of cell-specific configuration information, UE-specific configuration information, or UE group-specific configuration information.

Step 4: a type of the second signal to be received preferentially is determined based on the third configuration information. The specific implementation procedure is the same as that in Example 1, and is not repeated here.

At the resource location for receiving the first signal, the first signal is received first, and then at the resource location for receiving the second signal, the second signal is received.

It is counted, while starting to receive the first signal, whether a number of times the first signal is received reaches a count of repeated transmissions or a maximum count of transmissions of the first signal configured in the first configuration information. If it is reached, stop receiving the first signal; otherwise, continue receiving the first signal.

Similarly, it is counted, while starting to receive the second signal, whether a number of consecutive times the second signal is not received reaches a maximum count of receptions of the second signal configured in the second configuration information. If it is reached, the second device enters the sleep state again; otherwise, the second device continues to receive the second signal.

In addition, the first device and the second device have an association relationship and may know reception capability information of each other. The first device, the second device, or the first device and the second device report the reception capability information. Based on received reception capability information, the network device determines the first configuration information, the second configuration information, and the third configuration information.

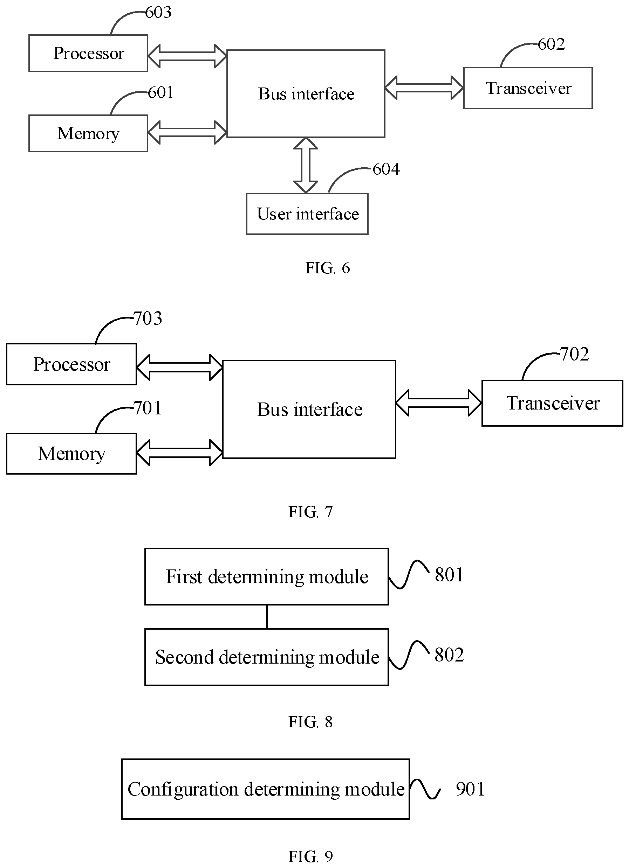

FIG. 6 is a schematic structural diagram of an electronic device according to an embodiment of the present application. As shown in FIG. 6, the electronic device includes a memory 601, a transceiver 602 and a processor 603, where the memory 601 is used for storing a computer program, and the transceiver 602 is used for receiving and sending data under control of the processor 603.

In an embodiment, the transceiver 602 is used for receiving and sending data under control of the processor 603.

In FIG. 6, a bus architecture may include any number of interconnected buses and bridges, which are linked together through various circuits of one or more processors represented by the processor 603 and one or more memories represented by the memory 601. The bus architecture may also link together various other circuits, such as peripherals, voltage regulators, and power management circuits, etc., which are well known in the art, and therefore are not further described in the present application. The bus interface provides an interface. The transceiver 602 may include multiple elements, i.e., including a transmitter and a receiver, units for providing communication with various other devices over transmission media including wireless channels, wired channels, fiber optic cables, and the like. For different user equipment, a user interface 604 may be an interface capable of externally or internally connecting the required equipment, and the connected equipment includes, but not limited to, a keypad, a display, a speaker, a microphone, a joystick, and the like.

The processor 603 is responsible for managing the bus architecture and general processing, and the memory 601 may store data used by the processor 603 when performing operations.

In an embodiment, the processor 603 may be a central processing unit (CPU), an application specific integrated circuit (ASIC), a field-programmable gate array (FPGA), or a complex programmable logic device (CPLD), and the processor may also use a multi-core architecture.

The processor calls the computer program stored in the memory to execute any of the methods provided by the embodiments of the present application in accordance with the obtained executable instructions. The processor and the memory may also be physically arranged separately.

The processor 603 is used for reading the computer program in the memory 601 and performing following operations:

determining, based on first configuration information sent from a network device, a resource location for a first device to receive a first signal, where the first signal is used to instruct the first device to wake up a second device; and determining, based on second configuration information sent from the network device and the resource location for the first device to receive the first signal, a resource location for the second device to receive a second signal, where the second signal is used for the second device, after being woken up, to access the network device, or to perform a signal transmission or a data transmission with the network device.

In some embodiments, the first configuration information includes one or more of:

a time-domain location of the first signal;
a frequency-domain location or a frequency-domain synchronization raster of the first signal;
a symbol length occupied by the first signal;
a mapping way of the first signal in a time-frequency resource;
a count of repeated transmissions or a maximum count of transmissions of the first signal;
a number of second devices associated with the first signal;
a number of second device groups associated with the first signal; or
a number of resource locations of a second signal associated with the first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and the resource location for the second device to receive the second signal, where the resource location corresponding to the reference point is a resource location for the first device to receive a first one of the first signals or a resource location for the first device to receive a last one of the first signals;
first search space configuration information, used to configure a first period for receiving the second signal, a start reception location offset and a second duration within a single first period, and a type of the second signal;
second search space configuration information, used to configure a second period for receiving the second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive the second signal; or
a count or a maximum count of receptions of the second signal.

In some embodiments, the duration of the reception window is multiple unit durations determined in a unit of a system frame, a slot, a symbol, or a paging cycle.

In some embodiments, determining, based on the second configuration information sent from the network device and the resource location for the first device to receive the first signal, the resource location for the second device to receive the second signal includes:

determining, based on the start moment of the reception window configured in the reception window configuration information included in the second configuration information and the resource location corresponding to the reference point, a start resource location of the reception window;

determining, based on the start resource location of the reception window and the duration of the reception window, or based on the start resource location of the reception window and the end moment of the reception window configured in the reception window configuration information included in the second configuration information, an end resource location of the reception window; and

determining, based on the second search space configuration information included in the second configuration information, the resource location for the second device to receive the second signal between the start resource location of the reception window and the end resource location of the reception window.

In some embodiments, determining, based on the second configuration information sent from the network device and the resource location for the first device to receive the first signal, the resource location for the second device to receive the second signal includes:

determining, based on the first search space configuration information and/or the second search space configuration information included in the second configuration information, candidate resource locations for receiving the second signal;

among the candidate resource locations, determining, based on a first rule and a first input parameter, a paging frame where a start resource location for receiving the second signal is located as a target paging frame, where the first input parameter is one or more of a system frame where the resource location corresponding to the reference point is located, the paging cycle T, a number N of paging frames within the paging cycle, or the reference time-domain offset in the second configuration information;

in the target paging frame, determining, based on an index calculation rule and a second input parameter, an index value corresponding to a symbol location for receiving the second signal, where the second input parameter is one or more of an identifier of the second device, the number N of paging frames within the paging cycle, or a total number Ns of paging occasions in a single paging frame; and

determining, based on a start reception symbol location set *firstPDCCH-MonitoringOccasionOfPO* configured in a first system information block (SIB1), a paging occasion matching the index value corresponding to the symbol location for receiving the second signal, and taking the paging occasion as the resource location for receiving the second signal.

In some embodiments, determining, based on the second configuration information sent from the network device and the resource location for the first device to receive the first signal, the resource location for the second device to receive the second signal includes:

determining, based on the first search space configuration information and/or the second search space configuration information included in the second configuration information, candidate resource locations for receiving the second signal;

among the candidate resource locations, determining, based on the resource location for the first device to receive the first signal and the reference time-domain offset in the second configuration information, a target paging frame for the second device to receive the second signal; and

in the target paging frame, sequentially determining, based on the second period in the second search space configuration information in the second configuration information, resource locations for receiving the second signal.

In some embodiments, the operations further include:

in case that the second configuration information sent from the network device further includes a fourth duration associated with the first signal for receiving the second signal, determining the resource location for the second device to receive the second signal based on the second configuration information; and

determining the resource location for the second device to receive the second signal based on the second configuration information includes:

obtaining the first period in the first search space configuration information in the second configuration information;

within each first period, sequentially determining, based on the reference time-domain offset in the second configuration information, the resource location for the second device to receive the second signal; and
determining, based on the fourth duration and the reference time-domain offset in the second configuration information and a resource location for receiving a target second signal, a resource location for the first device to receive at least one first signal;
where the fourth duration is an integer multiple of a discontinuous reception cycle or paging cycle for receiving the second signal.

In some embodiments, the operations further include:

receiving the first signal at the resource location for receiving the first signal; and
in case that the count of repeated transmissions or the maximum count of transmissions of the first signal included in the first configuration information is reached, no longer receiving the first signal.

In some embodiments, the operations further include:

receiving the second signal at the resource location for receiving the second signal; and
in case that the maximum count of receptions of the second signal included in the second configuration information is reached and the second signal is not received, the second device enters a sleep state.

In some embodiments, before determining, based on the first configuration information sent from the network device, the resource location for the first device to receive the first signal, the operations further include:

reporting reception capability information to the network device, where the reception capability information is used for the network device to determine the first configuration information and/or the second configuration information; and the reception capability information includes one or more of:

a type of a receiver of the first device;
a sensitivity of a receiver of the first device;
a transition delay of the second device from an ultra-deep sleep state to an active state; or
version information of a communication standard that the second device supports.

In some embodiments, the first rule satisfies following formula:

$$(\text{LP-WUS\_SFN} + \text{LP-WUS\_offset} + \text{SFN}) \bmod T = T \text{ div } N,$$

where LP-WUS_SFN represents the system frame where the resource location corresponding to the reference point is located, LP-WUS_offset represents the reference time-domain offset, SFN represents the paging frame where the start resource location for receiving the second signal is located, mod() represents modulo, T represents a discontinuous reception cycle or the paging cycle, and N represents the number of paging frames within the paging cycle.

In some embodiments, the index calculation rule satisfies following formula:

$$\text{i\_s} = \text{floor (UE\_ID/N) mod Ns},$$

where UE_ID represents the identifier of the second device, N represents the number of paging frames within the paging cycle, floor() represents rounding down, mod() represents modulo, Ns is the total number of paging occasions in a single paging frame, and i_s represents the index value corresponding to the symbol location for receiving the second signal.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In some embodiments, the first configuration information and/or the second configuration information is activated by a dynamic signaling, or the first configuration information and/or the second configuration information is deactivated by a dynamic signaling.

In some embodiments, the second search space configuration information includes one or more of:

a period for receiving the second signal;
a start location offset for receiving the second signal;
a third duration for receiving the second signal;
a start reception symbol within a single period for receiving the second signal;
an aggregation level; or
a downlink control information format for determining the type of the second signal.

In some embodiments, the operations further include:

determining, based on the type of the second signal in the second configuration information and the resource location for receiving the second signal, a type of a received second signal, where the type of the second signal includes a paging occasion or a paging early indication;
determining, based on third configuration information sent from the network device, whether paging early indication configuration information is configured, where the paging early indication configuration information is used to indicate a type of the second signal that the second device preferentially receives; and
in case that the paging early indication configuration information is configured, triggering the second device to preferentially receive a paging early indication at a resource location where the type of the second signal is the paging early indication, and determine, based on information carried by the paging early indication, whether to receive a paging message at a resource location of a paging occasion associated with the paging early indication; or
in case that the paging early indication configuration information is not configured, triggering the second device to receive a paging message at a resource location where the type of the second signal is the paging occasion.

In some embodiments, the operations further include:

determining, based on the type of the second signal in the second configuration information and the resource location for receiving the second signal, a type of a received second signal, where the type of the second signal includes a paging occasion or a paging early indication;
determining, based on third configuration information sent from the network device, whether a skip parameter is configured and/or whether a configured skip parameter is activated, where the skip parameter is used to indicate whether to skip a paging early indication occasion and/or to indicate a type of the second signal that the second device preferentially receives; and
in case that the skip parameter is configured and/or the configured skip parameter is activated, triggering the second device to receive a paging message at a resource location where the type of the second signal is the paging occasion; or
in case that the skip parameter is not configured and/or the configured skip parameter is not activated, triggering the second device to preferentially receive a paging early indication at a resource location where the type of the second signal is the paging early indication, and determine, based on information carried by the paging early indication, whether to receive a paging message at a resource location of a paging occasion associated with the paging early indication.

In some embodiments, the paging cycle T in the first input parameter is configured by one or more of the SIB1, a non-access stratum (NAS) message, or a radio resource control (RRC) message; and in case that the paging cycle T configured by one or more of the SIB1, the NAS message, or the RRC message includes multiple configuration values, a minimum value among the multiple configuration values is determined as the paging cycle T.

It should be noted here that the above electronic device provided by the embodiments of the present application may implement all the method steps implemented by the above method embodiments, and may achieve the same effect. The same parts and beneficial effects as those of the method embodiments are not repeated in the present application.

FIG. 7 is a schematic structural diagram of a network device according to an embodiment of the present application. As shown in FIG. 7, the network device includes a memory 701, a transceiver 702 and a processor 703, where the memory 701 is used for storing a computer program, and the transceiver 702 is used for receiving and sending data under control of the processor 703.

In an embodiment, the transceiver 702 is used for receiving and sending data under control of the processor 703.

In FIG. 7, a bus architecture may include any number of interconnected buses and bridges, which are linked together through various circuits of one or more processors represented by the processor 703 and one or more memories represented by the memory 701. The bus architecture may also link together various other circuits, such as peripherals, voltage regulators, and power management circuits, etc., which are well known in the art, and therefore are not further described in the present application. The bus interface provides an interface. The transceiver 702 may include multiple elements, i.e., including a transmitter and a receiver, units for providing communication with various other devices over transmission media including wireless channels, wired channels, fiber optic cables, and the like.

The processor 703 is responsible for managing the bus architecture and general processing, and the memory 701 may store data used by the processor 703 when performing operations.

The processor 703 may be a CPU, an ASIC, an FPGA, or a CPLD, and the processor may also use a multi-core architecture.

The processor calls the computer program stored in the memory to execute any of the methods provided by the embodiments of the present application in accordance with the obtained executable instructions. The processor and memory may be physically arranged separately.

The processor 703 is used for reading the computer program in the memory 701 and performing following operations:

determining, based on obtained reception capability information or a service requirement, first configuration information and/or second configuration information;
where the reception capability information includes one or more of:

a type of a receiver of a first device;
a sensitivity of a receiver of a first device;
a transition delay of a second device from an ultra-deep sleep state to an active state; or
version information of a communication standard that a second device supports; and
the service requirement includes one or more of: a paging requirement, a data transmission requirement, or a signal transmission requirement.

In some embodiments, determining, based on the obtained reception capability information or the service requirement, the first configuration information and/or the second configuration information includes:

in case that the reception capability information reported from a target device is received, determining, based on the reception capability information reported from the target device, the first configuration information and/or the second configuration information to be sent to the target device; or,
in case that the reception capability information reported from a target device is not received, determining, based on the service requirement, the first configuration information and/or the second configuration information;
where the target device is at least one of all first devices and/or all second devices within a coverage area of a network device.

In some embodiments, determining, based on the reception capability information reported from the target device, the first configuration information and/or the second configuration information to be sent to the target device includes:

determining, based on the type of the receiver of the first device and/or the sensitivity of the receiver of the first device included in the reception capability information, the first configuration information to be sent to the first device, where the first configuration information is used for the first device to determine a resource location for receiving a first signal, and the first signal is used to instruct the first device to wake up a second device; and
determining, based on the transition delay of the second device from the ultra-deep sleep state to the active state included in the reception capability information, the second configuration information to be sent to the second device, where the second configuration information is used for the second device to determine a resource location for receiving a second signal.

In some embodiments, the first configuration information includes one or more of:

a time-domain location of a first signal;
a frequency-domain location or a frequency-domain synchronization raster of a first signal;
a symbol length occupied by a first signal;
a mapping way of a first signal in a time-frequency resource;
a count of repeated transmissions or a maximum count of transmissions of a first signal;
a number of second devices associated with a first signal;
a number of second device groups associated with a first signal; or
a number of resource locations of a second signal associated with a first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and a resource location for a second device to receive a second signal, where the resource location corresponding to the reference point is a resource location for a first device to receive a first one of first signals or a resource location for a first device to receive a last one of first signals;
first search space configuration information, used to configure a first period for receiving a second signal, a start reception location offset and a second duration within a single first period, and a type of the second signal;
second search space configuration information, used to configure a second period for receiving a second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive a second signal; or
a count or a maximum count of receptions of the second signal.

In some embodiments, the duration of the reception window is multiple unit durations determined in a unit of a system frame, a slot, a symbol, or a paging cycle.
In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.
In some embodiments, the operations further include:

sending a dynamic signaling to a first device and/or a second device;
where the dynamic signaling is used to activate the first configuration information and/or the second configuration information, or the dynamic signaling is used to deactivate the first configuration information and/or the second configuration information.

In some embodiments, the operations further include:

determining, based on the version information of the communication standard that the second device supports included in the reception capability information, third configuration information, where the third configuration information is used to configure a type of a second signal that the second device preferentially receives, and the type of the second signal includes a paging early indication or a paging occasion; and
sending the third configuration information to the first device and/or the second device.

In some embodiments, the third configuration information includes one or more of:

paging early indication configuration information, used to indicate the type of the second signal that the second device preferentially receives; or
a skip parameter, used to indicate whether to skip a paging early indication occasion, and/or used to indicate the type of the second signal that the second device preferentially receives.

FIG. 8 is a first schematic structural diagram of an apparatus for determining low power access or transmission according to an embodiment of the present application. As shown in FIG. 8, the apparatus includes:

a first determining module 801, used for determining, based on first configuration information sent from a network device, a resource location for a first device to receive a first signal, where the first signal is used to instruct the first device to wake up a second device; and

a second determining module 802, used for determining, based on second configuration information sent from the network device and the resource location for the first device to receive the first signal, a resource location for the second device to receive a second signal, where the second signal is used for the second device, after being woken up, to access the network device, or to perform a signal transmission or a data transmission with the network device.

In some embodiments, the first configuration information includes one or more of:

a time-domain location of the first signal;
a frequency-domain location or a frequency-domain synchronization raster of the first signal;
a symbol length occupied by the first signal;
a mapping way of the first signal in a time-frequency resource;
a count of repeated transmissions or a maximum count of transmissions of the first signal;
a number of second devices associated with the first signal;
a number of second device groups associated with the first signal; or
a number of resource locations of a second signal associated with the first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and the resource location for the second device to receive the second signal, where the resource location corresponding to the reference point is a resource location for the first device to receive a first one of the first signals or a resource location for the first device to receive a last one of the first signals;
first search space configuration information, used to configure a first period for receiving the second signal, a start reception location offset and a second duration within a single first period, and a type of the second signal;
second search space configuration information, used to configure a second period for receiving the second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive the second signal; or
a count or a maximum count of receptions of the second signal.

In some embodiments, the duration of the reception window is multiple unit durations determined in a unit of a system frame, a slot, a symbol, or a paging cycle.

In some embodiments, the second determining module 802 is used for:

determining, based on the start moment of the reception window configured in the reception window configuration information included in the second configuration information and the resource location corresponding to the reference point, a start resource location of the reception window;
determining, based on the start resource location of the reception window and the duration of the reception window, or based on the start resource location of the reception window and the end moment of the reception window configured in the reception window configuration information included in the second configuration information, an end resource location of the reception window; and

determining, based on the second search space configuration information included in the second configuration information, the resource location for the second device to receive the second signal between the start resource location of the reception window and the end resource location of the reception window.

In some embodiments, the second determining module 802 is used for:

determining, based on the first search space configuration information and/or the second search space configuration information included in the second configuration information, candidate resource locations for receiving the second signal;

among the candidate resource locations, determining, based on a first rule and a first input parameter, a paging frame where a start resource location for receiving the second signal is located as a target paging frame, where the first input parameter is one or more of a system frame where the resource location corresponding to the reference point is located, the paging cycle T, a number N of paging frames within the paging cycle, or the reference time-domain offset in the second configuration information;

in the target paging frame, determining, based on an index calculation rule and a second input parameter, an index value corresponding to a symbol location for receiving the second signal, where the second input parameter is one or more of an identifier of the second device, the number N of paging frames within the paging cycle, or a total number Ns of paging occasions in a single paging frame; and

determining, based on a start reception symbol location set *firstPDCCH-MonitoringOccasionOfPO* configured in a first system information block (SIB1), a paging occasion matching the index value corresponding to the symbol location for receiving the second signal, and taking the paging occasion as the resource location for receiving the second signal.

In some embodiments, the second determining module 802 is used for:

determining, based on the first search space configuration information and/or the second search space configuration information included in the second configuration information, candidate resource locations for receiving the second signal;

among the candidate resource locations, determining, based on the resource location for the first device to receive the first signal and the reference time-domain offset in the second configuration information, a target paging frame for the second device to receive the second signal; and

in the target paging frame, sequentially determining, based on the second period in the second search space configuration information in the second configuration information, resource locations for receiving the second signal.

In some embodiments, the apparatus further includes:

a third determining module, used for, in case that the second configuration information sent from the network device further includes a fourth duration associated with the first signal for receiving the second signal, determining the resource location for the second device to receive the second signal based on the second configuration information; and

the third determining module is used for:

obtaining the first period in the first search space configuration information in the second configuration information;

within each first period, sequentially determining, based on the reference time-domain offset in the second configuration information, the resource location for the second device to receive the second signal; and

determining, based on the fourth duration and the reference time-domain offset in the second configuration information and a resource location for receiving a target second signal, a resource location for the first device to receive at least one first signal;

where the fourth duration is an integer multiple of a discontinuous reception cycle or paging cycle for receiving the second signal.

In some embodiments, the apparatus further includes a first receiving module, and the first receiving module is used for:

receiving the first signal at the resource location for receiving the first signal; and

in case that the count of repeated transmissions or the maximum count of transmissions of the first signal included in the first configuration information is reached, no longer receiving the first signal.

In some embodiments, the apparatus further includes a second receiving module, and the second receiving module is used for:

receiving the second signal at the resource location for receiving the second signal; and
in case that the maximum count of receptions of the second signal included in the second configuration information is reached and the second signal is not received, the second device enters a sleep state.

In some embodiments, the apparatus further includes:

a reporting module, used for reporting reception capability information to the network device, where the reception capability information is used for the network device to determine the first configuration information and/or the second configuration information; and
the reception capability information includes one or more of:

a type of a receiver of the first device;
a sensitivity of a receiver of the first device;
a transition delay of the second device from an ultra-deep sleep state to an active state; or
version information of a communication standard that the second device supports.

In some embodiments, the first rule satisfies following formula:

$$(\text{LP-WUS\_SFN} + \text{LP-WUS\_offset} + \text{SFN}) \bmod T = T \operatorname{div} N,$$

where LP-WUS_SFN represents the system frame where the resource location corresponding to the reference point is located, LP-WUS_offset represents the reference time-domain offset, SFN represents the paging frame where the start resource location for receiving the second signal is located, mod() represents modulo, T represents a discontinuous reception cycle or the paging cycle, and N represents the number of paging frames within the paging cycle.

In some embodiments, the index calculation rule satisfies following formula:

$$i\_s = \operatorname{floor}(\text{UE\_ID}/N) \bmod N_s,$$

where UE_ID represents the identifier of the second device, N represents the number of paging frames within the paging cycle, floor() represents rounding down, mod() represents modulo, Ns is the total number of paging occasions in a single paging frame, and i_s represents the index value corresponding to the symbol location for receiving the second signal.

In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.

In some embodiments, the first configuration information and/or the second configuration information is activated by a dynamic signaling, or the first configuration information and/or the second configuration information is deactivated by a dynamic signaling.

In some embodiments, the second search space configuration information includes one or more of:

a period for receiving the second signal;
a start location offset for receiving the second signal;
a third duration for receiving the second signal;
a start reception symbol within a single period for receiving the second signal;
an aggregation level; or
a downlink control information format for determining the type of the second signal.

In some embodiments, the apparatus further includes:

a fourth determining module, used for determining, based on the type of the second signal in the second configuration information and the resource location for receiving the second signal, a type of a received second signal, where the type of the second signal includes a paging occasion or a paging early indication; and

a fifth determining module, used for determining, based on third configuration information sent from the network device, whether paging early indication configuration information is configured, where the paging early indication configuration information is used to indicate a type of the second signal that the second device preferentially receives; in case that the paging early indication configuration information is configured, triggering the second device preferentially to receive a paging early indication at a resource location where the type of the second signal is the paging early indication, and determine, based on information carried by the paging early indication, whether to receive a paging message at a resource location of a paging occasion associated with the paging early indication; or in case that the paging early indication configuration information is not configured, triggering the second device to receive a paging message at a resource location where the type of the second signal is the paging occasion.

In some embodiments, the apparatus further includes:

a fourth determining module, used for determining, based on the type of the second signal in the second configuration information and the resource location for receiving the second signal, a type of a received second signal, where the type of the second signal includes a paging occasion or a paging early indication; and
a sixth determining module, used for determining, based on third configuration information sent from the network device, whether a skip parameter is configured and/or whether a configured skip parameter is activated, where the skip parameter is used to indicate whether to skip a paging early indication occasion and/or to indicate a type of the second signal that the second device preferentially receives; in case that the skip parameter is configured and/or the configured skip parameter is activated, triggering the second device to receive a paging message at a resource location where the type of the second signal is the paging occasion; or in case that the skip parameter is not configured and/or the configured skip parameter is not activated, triggering the second device to preferentially receive a paging early indication at a resource location where the type of the second signal is the paging early indication, and determine, based on information carried by the paging early indication, whether to receive a paging message at a resource location of a paging occasion associated with the paging early indication.

In some embodiments, the paging cycle T in the first input parameter is configured by one or more of the SIB1, a non-access stratum (NAS) message, or a radio resource control (RRC) message; and in case that the paging cycle T configured by one or more of the SIB1, the NAS message, or the RRC message includes multiple configuration values, a minimum value among the multiple configuration values is determined as the paging cycle T.

FIG. 9 is a second schematic structural diagram of an apparatus for determining low power access or transmission according to an embodiment of the present application. As shown in FIG. 9, the apparatus includes:

a configuration determining module 901, used for determining, based on obtained reception capability information or a service requirement, first configuration information and/or second configuration information; where the reception capability information includes one or more of:

a type of a receiver of a first device;
a sensitivity of a receiver of a first device;
a transition delay of a second device from an ultra-deep sleep state to an active state; or
version information of a communication standard that a second device supports; and
the service requirement includes one or more of: a paging requirement, a data transmission requirement, or a signal transmission requirement.

In some embodiments, the configuration determining module 901 includes:

a first determining unit, used for, in case that the reception capability information reported from a target device is received, determining, based on the reception capability information reported from the target device, the first configuration information and/or the second configuration information to be sent to the target device; or,
a second determining unit, used for, in case that the reception capability information reported from a target device is not received, determining, based on the service requirement, the first configuration information and/or the second configuration information;
where the target device is at least one of all first devices and/or all second devices within a coverage area of a network device.

In some embodiments, the first determining unit is used for:

determining, based on the type of the receiver of the first device and/or the sensitivity of the receiver of the first device included in the reception capability information, the first configuration information to be sent to the first device, where the first configuration information is used for the first device to determine a resource location for receiving a first signal, and the first signal is used to instruct the first device to wake up a second device; and

determining, based on the transition delay of the second device from the ultra-deep sleep state to the active state included in the reception capability information, the second configuration information to be sent to the second device, where the second configuration information is used for the second device to determine a resource location for receiving a second signal.

In some embodiments, the first configuration information includes one or more of:

a time-domain location of a first signal;
a frequency-domain location or a frequency-domain synchronization raster of a first signal;
a symbol length occupied by a first signal;
a mapping way of a first signal in a time-frequency resource;
a count of repeated transmissions or a maximum count of transmissions of a first signal;
a number of second devices associated with a first signal;
a number of second device groups associated with a first signal; or
a number of resource locations of a second signal associated with a first signal.

In some embodiments, the time-domain location of the first signal includes one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal includes one or more of:

a reception period of the first signal;
a frequency-domain start reception location of the first signal within one reception period;
a frequency-domain end reception location of the first signal within one reception period; or
a frequency-domain first bandwidth of the first signal within one reception period.

In some embodiments, the second configuration information includes one of more of:

a reference time-domain offset, used to represent a time-domain offset between a resource location corresponding to a reference point and a resource location for a second device to receive a second signal, where the resource location corresponding to the reference point is a resource location for a first device to receive a first one of first signals or a resource location for a first device to receive a last one of first signals;
first search space configuration information, used to configure a first period for receiving a second signal, a start reception location offset and a second duration within a single first period, and a type of the second signal;
second search space configuration information, used to configure a second period for receiving a second signal, a start reception location offset and a third duration within a single second period, and a type of the second signal;
reception window configuration information, used to configure any or a combination of a start moment of a reception window, a duration of a reception window, or an end moment of a reception window, where the reception window is used to receive a second signal; or
a count or a maximum count of receptions of the second signal.

In some embodiments, the duration of the reception window is multiple unit durations determined in a unit of a system frame, a slot, a symbol, or a paging cycle.
In some embodiments, a type of the first configuration information includes one or more of: cell-specific configuration information, UE-specific configuration information, or UE group-specific configuration information; and a type of the second configuration information includes one or more of: cell-specific configuration information, UE-specific configuration information, or UE group-specific configuration information; where the cell-specific configuration information, the UE-specific configuration information, and the UE group-specific configuration information are carried in a radio resource control (RRC) signaling, a dynamic signaling, or a broadcast signaling.
In some embodiments, the apparatus further includes:

a first sending module, used for sending a dynamic signaling to a first device and/or a second device;
where the dynamic signaling is used to activate the first configuration information and/or the second configuration information, or the dynamic signaling is used to deactivate the first configuration information and/or the second configuration information.

In some embodiments, the apparatus further includes:

a seventh determining module, used for determining, based on the version information of the communication standard that the second device supports included in the reception capability information, third configuration information, where the third configuration information is used to configure a type of a second signal that the second device preferentially receives, and the type of the second signal includes a paging early indication or a paging occasion; and

a second sending module, used for sending the third configuration information to the first device and/or the second device.

In some embodiments, the third configuration information includes one or more of:

paging early indication configuration information, used to indicate the type of the second signal that the second device preferentially receives; or
a skip parameter, used to indicate whether to skip a paging early indication occasion, and/or used to indicate the type of the second signal that the second device preferentially receives.

The methods and apparatuses provided by the embodiments of the present application are based on the same conception. Since the principles of the methods and apparatuses are similar, for the implementation of the apparatuses and methods, reference may be made to each other. The same parts are not repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus provided by the embodiments of the present application may implement all the method steps implemented by the above method embodiments, and may achieve the same effect. The same parts and beneficial effects as those of same method embodiments are not repeated here.

An embodiment of the present application further provides a processor readable storage medium storing a computer program, where the computer program is used for causing a processor to perform any of the methods for determining low power access or transmission provided by the above embodiments.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for determining low power access or transmission, comprising:

   determining, based on first configuration information sent from a network device, a resource location for a first device to receive a first signal, wherein the first signal is used to instruct the first device to wake up a second device; and
   determining, based on second configuration information sent from the network device and the resource location for the first device to receive the first signal, a resource location for the second device to receive a second signal, wherein the second signal is used for the second device, after being woken up, to access the network device, or to perform a signal transmission or a data transmission with the network device.

2. The method of claim 1, wherein the first configuration information comprises one or more of:

   a time-domain location of the first signal;
   a frequency-domain location or a frequency-domain synchronization raster of the first signal;
   a symbol length occupied by the first signal;
   a mapping way of the first signal in a time-frequency resource;
   a count of repeated transmissions or a maximum count of transmissions of the first signal;
   a number of second devices associated with the first signal;
   a number of second device groups associated with the first signal; or
   a number of resource locations of a second signal associated with the first signal.

3. The method of claim 2, wherein the time-domain location of the first signal comprises one or more of:

   a reception period of the first signal;
   a time-domain start reception location of the first signal within one reception period;
   a time-domain end reception location of the first signal within one reception period; or
   a first duration of the first signal within one reception period; and
   the frequency-domain location of the first signal comprises one or more of:

      a reception period of the first signal;
      a frequency-domain start reception location of the first signal within one reception period;
      a frequency-domain end reception location of the first signal within one reception period; or
      a frequency-domain first bandwidth of the first signal within one reception period.

4. The method of claim 1, wherein the second configuration information comprises one of more of:

a reference time-domain offset, used to represent a time-domain offset between a resource location corresponding to a reference point and the resource location for the second device to receive the second signal, wherein the resource location corresponding to the reference point is a resource location for the first device to receive a first one of the first signals or a resource location for the first device to receive a last one of the first signals;

first search space configuration information, used to configure a first period for receiving the second signal, a start reception location offset and a second duration within a single first period, and a type of the second signal;

second search space configuration information, used to configure a second period for receiving the second signal, a start reception location offset and a third duration within a single second period, and a type of the second signal;

reception window configuration information, used to configure any or a combination of a start moment of a reception window, a duration of a reception window, or an end moment of a reception window, wherein the reception window is used to receive the second signal; or

a count or a maximum count of receptions of the second signal.

5. The method of claim 4, wherein the duration of the reception window is multiple unit durations determined in a unit of a system frame, a slot, a symbol, or a paging cycle.

6. The method of claim 5, wherein determining, based on the second configuration information sent from the network device and the resource location for the first device to receive the first signal, the resource location for the second device to receive the second signal comprises:

determining, based on the start moment of the reception window configured in the reception window configuration information comprised in the second configuration information and the resource location corresponding to the reference point, a start resource location of the reception window;

determining, based on the start resource location of the reception window and the duration of the reception window, or based on the start resource location of the reception window and the end moment of the reception window configured in the reception window configuration information comprised in the second configuration information, an end resource location of the reception window; and

determining, based on the second search space configuration information comprised in the second configuration information, the resource location for the second device to receive the second signal between the start resource location of the reception window and the end resource location of the reception window.

7. The method of claim 5, wherein determining, based on the second configuration information sent from the network device and the resource location for the first device to receive the first signal, the resource location for the second device to receive the second signal comprises:

determining, based on the first search space configuration information and/or the second search space configuration information comprised in the second configuration information, candidate resource locations for receiving the second signal;

among the candidate resource locations, determining, based on a first rule and a first input parameter, a paging frame where a start resource location for receiving the second signal is located as a target paging frame, wherein the first input parameter is one or more of a system frame where the resource location corresponding to the reference point is located, the paging cycle T, a number N of paging frames within the paging cycle, or the reference time-domain offset in the second configuration information;

in the target paging frame, determining, based on an index calculation rule and a second input parameter, an index value corresponding to a symbol location for receiving the second signal, wherein the second input parameter is one or more of an identifier of the second device, the number N of paging frames within the paging cycle, or a total number Ns of paging occasions in a single paging frame; and

determining, based on a start reception symbol location set *firstPDCCH-MonitoringOccasionOfPO* configured in a first system information block (SIB1), a paging occasion matching the index value corresponding to the symbol location for receiving the second signal, and taking the paging occasion as the resource location for receiving the second signal.

8. The method of claim 5, wherein determining, based on the second configuration information sent from the network device and the resource location for the first device to receive the first signal, the resource location for the second device to receive the second signal comprises:

determining, based on the first search space configuration information and/or the second search space configuration information comprised in the second configuration information, candidate resource locations for receiving the second signal;

among the candidate resource locations, determining, based on the resource location for the first device to receive the first signal and the reference time-domain offset in the second configuration information, a target paging frame for the second device to receive the second signal; and

in the target paging frame, sequentially determining, based on the second period in the second search space configuration information in the second configuration information, resource locations for receiving the second signal.

9. The method of claim 5, further comprising:

in case that the second configuration information sent from the network device further comprises a fourth duration associated with the first signal for receiving the second signal, determining the resource location for the second device to receive the second signal based on the second configuration information; and

determining the resource location for the second device to receive the second signal based on the second configuration information comprises:

obtaining the first period in the first search space configuration information in the second configuration information;

within each first period, sequentially determining, based on the reference time-domain offset in the second configuration information, the resource location for the second device to receive the second signal; and

determining, based on the fourth duration and the reference time-domain offset in the second configuration information and a resource location for receiving a target second signal, a resource location for the first device to receive at least one first signal;

wherein the fourth duration is an integer multiple of a discontinuous reception cycle or paging cycle for receiving the second signal.

10. The method of any of claims 6 to 9, further comprising:

receiving the first signal at the resource location for receiving the first signal; and

in case that the count of repeated transmissions or the maximum count of transmissions of the first signal comprised in the first configuration information is reached, no longer receiving the first signal.

11. The method of any of claims 6 to 9, further comprising:

receiving the second signal at the resource location for receiving the second signal; and

in case that the maximum count of receptions of the second signal comprised in the second configuration information is reached and the second signal is not received, the second device enters a sleep state.

12. The method of claim 1, wherein before determining, based on the first configuration information sent from the network device, the resource location for the first device to receive the first signal, the method further comprises:

reporting reception capability information to the network device, wherein the reception capability information is used for the network device to determine the first configuration information and/or the second configuration information; and

the reception capability information comprises one or more of:

a type of a receiver of the first device;

a sensitivity of a receiver of the first device;

a transition delay of the second device from an ultra-deep sleep state to an active state; or

version information of a communication standard that the second device supports.

13. The method of claim 7, wherein the first rule satisfies following formula:

$$(LP\text{-}WUS\_SFN + LP\text{-}WUS\_offset + SFN) \bmod T = T \dim N,$$

wherein LP-WUS_SFN represents the system frame where the resource location corresponding to the reference point is located, LP-WUS_offset represents the reference time-domain offset, SFN represents the paging frame where the start resource location for receiving the second signal is located, mod() represents modulo, T represents a discontinuous reception cycle or the paging cycle, and N represents the number of paging frames within the paging cycle.

14. The method of claim 7, wherein the index calculation rule satisfies following formula:

$$i\_s = floor\ (UE\_ID/N)\ mod\ Ns,$$

wherein UE_ID represents the identifier of the second device, N represents the number of paging frames within the paging cycle, floor() represents rounding down, mod() represents modulo, Ns is the total number of paging occasions in a single paging frame, and i_s represents the index value corresponding to the symbol location for receiving the second signal.

15. The method of claim 1, wherein a type of the first configuration information comprises one or more of: cell-specific configuration information, UE-specific configuration information, or UE group-specific configuration information; and a type of the second configuration information comprises one or more of: cell-specific configuration information, UE-specific configuration information, or UE group-specific configuration information; wherein the cell-specific configuration information, the UE-specific configuration information, and the UE group-specific configuration information are carried in a radio resource control (RRC) signaling, a dynamic signaling, or a broadcast signaling.

16. The method of claim 1, wherein the first configuration information and/or the second configuration information is activated by a dynamic signaling, or the first configuration information and/or the second configuration information is deactivated by a dynamic signaling.

17. The method of claim 4, wherein the second search space configuration information comprises one or more of:

a period for receiving the second signal;
a start location offset for receiving the second signal;
a third duration for receiving the second signal;
a start reception symbol within a single period for receiving the second signal;
an aggregation level; or
a downlink control information format for determining the type of the second signal.

18. The method of any of claims 6 to 9, further comprising:

determining, based on the type of the second signal in the second configuration information and the resource location for receiving the second signal, a type of a received second signal, wherein the type of the second signal comprises a paging occasion or a paging early indication;
determining, based on third configuration information sent from the network device, whether paging early indication configuration information is configured, wherein the paging early indication configuration information is used to indicate a type of the second signal that the second device preferentially receives; and
in case that the paging early indication configuration information is configured, triggering the second device to preferentially receive a paging early indication at a resource location where the type of the second signal is the paging early indication, and determine, based on information carried by the paging early indication, whether to receive a paging message at a resource location of a paging occasion associated with the paging early indication; or
in case that the paging early indication configuration information is not configured, triggering the second device to receive a paging message at a resource location where the type of the second signal is the paging occasion.

19. The method of any of claims 6 to 9, further comprising:

determining, based on the type of the second signal in the second configuration information and the resource location for receiving the second signal, a type of a received second signal, wherein the type of the second signal comprises a paging occasion or a paging early indication;
determining, based on third configuration information sent from the network device, whether a skip parameter is configured and/or whether a configured skip parameter is activated, wherein the skip parameter is used to indicate whether to skip a paging early indication occasion and/or to indicate a type of the second signal that the second device preferentially receives; and

in case that the skip parameter is configured and/or the configured skip parameter is activated, triggering the second device to receive a paging message at a resource location where the type of the second signal is the paging occasion; or

in case that the skip parameter is not configured and/or the configured skip parameter is not activated, triggering the second device to preferentially receive a paging early indication at a resource location where the type of the second signal is the paging early indication, and determine, based on information carried by the paging early indication, whether to receive a paging message at a resource location of a paging occasion associated with the paging early indication.

20. The method of claim 7, wherein the paging cycle T in the first input parameter is configured by one or more of the SIB1, a non-access stratum (NAS) message, or a radio resource control (RRC) message; and in case that the paging cycle T configured by one or more of the SIB1, the NAS message, or the RRC message comprises multiple configuration values, a minimum value among the multiple configuration values is determined as the paging cycle T.

21. A method for determining low power access or transmission, comprising:

determining, based on obtained reception capability information or a service requirement, first configuration information and/or second configuration information;
wherein the reception capability information comprises one or more of:

a type of a receiver of a first device;
a sensitivity of a receiver of a first device;
a transition delay of a second device from an ultra-deep sleep state to an active state; or
version information of a communication standard that a second device supports; and
the service requirement comprises one or more of: a paging requirement, a data transmission requirement, or a signal transmission requirement.

22. The method of claim 21, wherein determining, based on the obtained reception capability information or the service requirement, the first configuration information and/or the second configuration information comprises:

in case that the reception capability information reported from a target device is received, determining, based on the reception capability information reported from the target device, the first configuration information and/or the second configuration information to be sent to the target device; or,
in case that the reception capability information reported from a target device is not received, determining, based on the service requirement, the first configuration information and/or the second configuration information;
wherein the target device is at least one of all first devices and/or all second devices within a coverage area of a network device.

23. The method of claim 22, wherein determining, based on the reception capability information reported from the target device, the first configuration information and/or the second configuration information to be sent to the target device comprises:

determining, based on the type of the receiver of the first device and/or the sensitivity of the receiver of the first device comprised in the reception capability information, the first configuration information to be sent to the first device, wherein the first configuration information is used for the first device to determine a resource location for receiving a first signal, and the first signal is used to instruct the first device to wake up a second device; and
determining, based on the transition delay of the second device from the ultra-deep sleep state to the active state comprised in the reception capability information, the second configuration information to be sent to the second device, wherein the second configuration information is used for the second device to determine a resource location for receiving a second signal.

24. The method of claim 21, wherein the first configuration information comprises one or more of:

a time-domain location of a first signal;
a frequency-domain location or a frequency-domain synchronization raster of a first signal;
a symbol length occupied by a first signal;

a mapping way of a first signal in a time-frequency resource;
a count of repeated transmissions or a maximum count of transmissions of a first signal;
a number of second devices associated with a first signal;
a number of second device groups associated with a first signal; or
a number of resource locations of a second signal associated with a first signal.

25. The method of claim 24, wherein the time-domain location of the first signal comprises one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal comprises one or more of:

a reception period of the first signal;
a frequency-domain start reception location of the first signal within one reception period;
a frequency-domain end reception location of the first signal within one reception period; or
a frequency-domain first bandwidth of the first signal within one reception period.

26. The method of claim 21, wherein the second configuration information comprises one of more of:

a reference time-domain offset, used to represent a time-domain offset between a resource location corresponding to a reference point and a resource location for a second device to receive a second signal, wherein the resource location corresponding to the reference point is a resource location for a first device to receive a first one of first signals or a resource location for a first device to receive a last one of first signals;
first search space configuration information, used to configure a first period for receiving a second signal, a start reception location offset and a second duration within a single first period, and a type of the second signal;
second search space configuration information, used to configure a second period for receiving a second signal, a start reception location offset and a third duration within a single second period, and a type of the second signal;
reception window configuration information, used to configure any or a combination of a start moment of a reception window, a duration of a reception window, or an end moment of a reception window, wherein the reception window is used to receive a second signal; or
a count or a maximum count of receptions of the second signal.

27. The method of claim 26, wherein the duration of the reception window is multiple unit durations determined in a unit of a system frame, a slot, a symbol, or a paging cycle.

28. The method of any of claims 21 to 27, wherein a type of the first configuration information comprises one or more of: cell-specific configuration information, UE-specific configuration information, or UE group-specific configuration information; and a type of the second configuration information comprises one or more of: cell-specific configuration information, UE-specific configuration information, or UE group-specific configuration information; wherein the cell-specific configuration information, the UE-specific configuration information, and the UE group-specific configuration information are carried in a radio resource control (RRC) signaling, a dynamic signaling, or a broadcast signaling.

29. The method of claim 28, further comprising:

sending a dynamic signaling to a first device and/or a second device;
wherein the dynamic signaling is used to activate the first configuration information and/or the second configuration information, or the dynamic signaling is used to deactivate the first configuration information and/or the second configuration information.

30. The method of claim 29, further comprising:

determining, based on the version information of the communication standard that the second device supports comprised in the reception capability information, third configuration information, wherein the third configuration information is used to configure a type of a second signal that the second device preferentially receives, and the type of the second signal comprises a paging early indication or a paging occasion; and
sending the third configuration information to the first device and/or the second device.

**31.** The method of claim 30, wherein the third configuration information comprises one or more of:

paging early indication configuration information, used to indicate the type of the second signal that the second device preferentially receives; or

a skip parameter, used to indicate whether to skip a paging early indication occasion, and/or used to indicate the type of the second signal that the second device preferentially receives.

**32.** An electronic device, comprising a memory, a transceiver and a processor, wherein the memory is used for storing a computer program, the transceiver is used for receiving and sending data under control of the processor, and the processor is used for reading the computer program in the memory and performing following operations:

determining, based on first configuration information sent from a network device, a resource location for a first device to receive a first signal, wherein the first signal is used to instruct the first device to wake up a second device; and

determining, based on second configuration information sent from the network device and the resource location for the first device to receive the first signal, a resource location for the second device to receive a second signal, wherein the second signal is used for the second device, after being woken up, to access the network device, or to perform a signal transmission or a data transmission with the network device.

**33.** The electronic device of claim 32, wherein the first configuration information comprises one or more of:

a time-domain location of the first signal;

a frequency-domain location or a frequency-domain synchronization raster of the first signal;

a symbol length occupied by the first signal;

a mapping way of the first signal in a time-frequency resource;

a count of repeated transmissions or a maximum count of transmissions of the first signal;

a number of second devices associated with the first signal;

a number of second device groups associated with the first signal; or

a number of resource locations of a second signal associated with the first signal.

**34.** The electronic device of claim 33, wherein the time-domain location of the first signal comprises one or more of:

a reception period of the first signal;

a time-domain start reception location of the first signal within one reception period;

a time-domain end reception location of the first signal within one reception period; or

a first duration of the first signal within one reception period; and

the frequency-domain location of the first signal comprises one or more of:

a reception period of the first signal;

a frequency-domain start reception location of the first signal within one reception period;

a frequency-domain end reception location of the first signal within one reception period; or

a frequency-domain first bandwidth of the first signal within one reception period.

**35.** The electronic device of claim 32, wherein the second configuration information comprises one of more of:

a reference time-domain offset, used to represent a time-domain offset between a resource location corresponding to a reference point and the resource location for the second device to receive the second signal, wherein the resource location corresponding to the reference point is a resource location for the first device to receive a first one of the first signals or a resource location for the first device to receive a last one of the first signals;

first search space configuration information, used to configure a first period for receiving the second signal, a start reception location offset and a second duration within a single first period, and a type of the second signal;

second search space configuration information, used to configure a second period for receiving the second signal, a start reception location offset and a third duration within a single second period, and a type of the second signal;

reception window configuration information, used to configure any or a combination of a start moment of a reception window, a duration of a reception window, or an end moment of a reception window, wherein the reception window is used to receive the second signal; or

a count or a maximum count of receptions of the second signal.

36. The electronic device of claim 35, wherein the duration of the reception window is multiple unit durations determined in a unit of a system frame, a slot, a symbol, or a paging cycle.

37. The electronic device of claim 36, wherein determining, based on the second configuration information sent from the network device and the resource location for the first device to receive the first signal, the resource location for the second device to receive the second signal comprises:

determining, based on the start moment of the reception window configured in the reception window configuration information comprised in the second configuration information and the resource location corresponding to the reference point, a start resource location of the reception window;
determining, based on the start resource location of the reception window and the duration of the reception window, or based on the start resource location of the reception window and the end moment of the reception window configured in the reception window configuration information comprised in the second configuration information, an end resource location of the reception window; and
determining, based on the second search space configuration information comprised in the second configuration information, the resource location for the second device to receive the second signal between the start resource location of the reception window and the end resource location of the reception window.

38. The electronic device of claim 36, wherein determining, based on the second configuration information sent from the network device and the resource location for the first device to receive the first signal, the resource location for the second device to receive the second signal comprises:

determining, based on the first search space configuration information and/or the second search space configuration information comprised in the second configuration information, candidate resource locations for receiving the second signal;
among the candidate resource locations, determining, based on a first rule and a first input parameter, a paging frame where a start resource location for receiving the second signal is located as a target paging frame, wherein the first input parameter is one or more of a system frame where the resource location corresponding to the reference point is located, the paging cycle T, a number N of paging frames within the paging cycle, or the reference time-domain offset in the second configuration information;
in the target paging frame, determining, based on an index calculation rule and a second input parameter, an index value corresponding to a symbol location for receiving the second signal, wherein the second input parameter is one or more of an identifier of the second device, the number N of paging frames within the paging cycle, or a total number Ns of paging occasions in a single paging frame; and
determining, based on a start reception symbol location set *firstPDCCH-MonitoringOccasionOfPO* configured in a first system information block (SIB1), a paging occasion matching the index value corresponding to the symbol location for receiving the second signal, and taking the paging occasion as the resource location for receiving the second signal.

39. The electronic device of claim 36, wherein determining, based on the second configuration information sent from the network device and the resource location for the first device to receive the first signal, the resource location for the second device to receive the second signal comprises:

determining, based on the first search space configuration information and/or the second search space configuration information comprised in the second configuration information, candidate resource locations for receiving the second signal;
among the candidate resource locations, determining, based on the resource location for the first device to receive the first signal and the reference time-domain offset in the second configuration information, a target paging frame for the second device to receive the second signal; and
in the target paging frame, sequentially determining, based on the second period in the second search space configuration information in the second configuration information, resource locations for receiving the second signal.

40. The electronic device of claim 36, wherein the operations further comprise:

in case that the second configuration information sent from the network device further comprises a fourth duration associated with the first signal for receiving the second signal, determining the resource location for the second device to receive the second signal based on the second configuration information; and
determining the resource location for the second device to receive the second signal based on the second configuration information comprises:

obtaining the first period in the first search space configuration information in the second configuration information;
within each first period, sequentially determining, based on the reference time-domain offset in the second configuration information, the resource location for the second device to receive the second signal; and
determining, based on the fourth duration and the reference time-domain offset in the second configuration information and a resource location for receiving a target second signal, a resource location for the first device to receive at least one first signal;
wherein the fourth duration is an integer multiple of a discontinuous reception cycle or paging cycle for receiving the second signal.

41. The electronic device of any of claims 37 to 40, wherein the operations further comprise:

receiving the first signal at the resource location for receiving the first signal; and
in case that the count of repeated transmissions or the maximum count of transmissions of the first signal comprised in the first configuration information is reached, no longer receiving the first signal.

42. The electronic device of any of claims 37 to 40, wherein the operations further comprise:

receiving the second signal at the resource location for receiving the second signal; and
in case that the maximum count of receptions of the second signal comprised in the second configuration information is reached and the second signal is not received, the second device enters a sleep state.

43. The electronic device of claim 32, wherein before determining, based on the first configuration information sent from the network device, the resource location for the first device to receive the first signal, the operations further comprise:

reporting reception capability information to the network device, wherein the reception capability information is used for the network device to determine the first configuration information and/or the second configuration information; and
the reception capability information comprises one or more of:

a type of a receiver of the first device;
a sensitivity of a receiver of the first device;
a transition delay of the second device from an ultra-deep sleep state to an active state; or
version information of a communication standard that the second device supports.

44. The electronic device of claim 38, wherein the first rule satisfies following formula:

$$(\text{LP-WUS\_SFN} + \text{LP-WUS\_offset} + \text{SFN}) \bmod T = T \operatorname{div} N,$$

wherein LP-WUS_SFN represents the system frame where the resource location corresponding to the reference point is located, LP-WUS_offset represents the reference time-domain offset, SFN represents the paging frame where the start resource location for receiving the second signal is located, mod() represents modulo, T represents a discontinuous reception cycle or the paging cycle, and N represents the number of paging frames within the paging cycle.

45. The electronic device of claim 38, wherein the index calculation rule satisfies following formula:

$$i\_s = \operatorname{floor}(\text{UE\_ID}/N) \bmod \text{Ns},$$

wherein UE_ID represents the identifier of the second device, N represents the number of paging frames within the paging cycle, floor() represents rounding down, mod() represents modulo, Ns is the total number of paging occasions in a single paging frame, and i_s represents the index value corresponding to the symbol location for receiving the second signal.

**46.** The electronic device of claim 32, wherein a type of the first configuration information comprises one or more of: cell-specific configuration information, UE-specific configuration information, or UE group-specific configuration information; and a type of the second configuration information comprises one or more of: cell-specific configuration information, UE-specific configuration information, or UE group-specific configuration information; wherein the cell-specific configuration information, the UE-specific configuration information, and the UE group-specific configuration information are carried in a radio resource control (RRC) signaling, a dynamic signaling, or a broadcast signaling.

**47.** The electronic device of claim 32, wherein the first configuration information and/or the second configuration information is activated by a dynamic signaling, or the first configuration information and/or the second configuration information is deactivated by a dynamic signaling.

**48.** The electronic device of claim 35, wherein the second search space configuration information comprises one or more of:

a period for receiving the second signal;
a start location offset for receiving the second signal;
a third duration for receiving the second signal;
a start reception symbol within a single period for receiving the second signal;
an aggregation level; or
a downlink control information format for determining the type of the second signal.

**49.** The electronic device of any of claims 37 to 40, wherein the operations further comprise:

determining, based on the type of the second signal in the second configuration information and the resource location for receiving the second signal, a type of a received second signal, wherein the type of the second signal comprises a paging occasion or a paging early indication;
determining, based on third configuration information sent from the network device, whether paging early indication configuration information is configured, wherein the paging early indication configuration information is used to indicate a type of the second signal that the second device preferentially receives; and
in case that the paging early indication configuration information is configured, triggering the second device to preferentially receive a paging early indication at a resource location where the type of the second signal is the paging early indication, and determine, based on information carried by the paging early indication, whether to receive a paging message at a resource location of a paging occasion associated with the paging early indication; or
in case that the paging early indication configuration information is not configured, triggering the second device to receive a paging message at a resource location where the type of the second signal is the paging occasion.

**50.** The electronic device of any of claims 37 to 40, wherein the operations further comprise:

determining, based on the type of the second signal in the second configuration information and the resource location for receiving the second signal, a type of a received second signal, wherein the type of the second signal comprises a paging occasion or a paging early indication;
determining, based on third configuration information sent from the network device, whether a skip parameter is configured and/or whether a configured skip parameter is activated, wherein the skip parameter is used to indicate whether to skip a paging early indication occasion and/or to indicate a type of the second signal that the second device preferentially receives; and
in case that the skip parameter is configured and/or the configured skip parameter is activated, triggering the second device to receive a paging message at a resource location where the type of the second signal is the paging occasion; or
in case that the skip parameter is not configured and/or the configured skip parameter is not activated, triggering the second device to preferentially receive a paging early indication at a resource location where the type of the second signal is the paging early indication, and determines, based on information carried by the paging early indication, whether to receive a paging message at a resource location of a paging occasion associated with the paging early indication.

51. The electronic device of claim 38, wherein the paging cycle T in the first input parameter is configured by one or more of the SIB1, a non-access stratum (NAS) message, or a radio resource control (RRC) message; and in case that the paging cycle T configured by one or more of the SIB1, the NAS message, or the RRC message comprises multiple configuration values, a minimum value among the multiple configuration values is determined as the paging cycle T.

52. A network device, comprising a memory, a transceiver and a processor,
wherein the memory is used for storing a computer program, the transceiver is used for receiving and sending data under control of the processor, and the processor is used for reading the computer program in the memory and performing following operations:

determining, based on obtained reception capability information or a service requirement, first configuration information and/or second configuration information;
wherein the reception capability information comprises one or more of:

a type of a receiver of a first device;
a sensitivity of a receiver of a first device;
a transition delay of a second device from an ultra-deep sleep state to an active state; or
version information of a communication standard that a second device supports; and
the service requirement comprises one or more of: a paging requirement, a data transmission requirement, or a signal transmission requirement.

53. The network device of claim 52, wherein determining, based on the obtained reception capability information or the service requirement, the first configuration information and/or the second configuration information comprises:

in case that the reception capability information reported from a target device is received, determining, based on the reception capability information reported from the target device, the first configuration information and/or the second configuration information to be sent to the target device; or,
in case that the reception capability information reported from a target device is not received, determining, based on the service requirement, the first configuration information and/or the second configuration information;
wherein the target device is at least one of all first devices and/or all second devices within a coverage area of a network device.

54. The network device of claim 53, wherein determining, based on the reception capability information reported from the target device, the first configuration information and/or the second configuration information to be sent to the target device comprises:

determining, based on the type of the receiver of the first device and/or the sensitivity of the receiver of the first device comprised in the reception capability information, the first configuration information to be sent to the first device, wherein the first configuration information is used for the first device to determine a resource location for receiving a first signal, and the first signal is used to instruct the first device to wake up a second device; and
determining, based on the transition delay of the second device from the ultra-deep sleep state to the active state comprised in the reception capability information, the second configuration information to be sent to the second device, wherein the second configuration information is used for the second device to determine a resource location for receiving a second signal.

55. The network device of claim 52, wherein the first configuration information comprises one or more of:

a time-domain location of a first signal;
a frequency-domain location or a frequency-domain synchronization raster of a first signal;
a symbol length occupied by a first signal;
a mapping way of a first signal in a time-frequency resource;
a count of repeated transmissions or a maximum count of transmissions of a first signal;
a number of second devices associated with a first signal;
a number of second device groups associated with a first signal; or
a number of resource locations of a second signal associated with a first signal.

56. The network device of claim 55, wherein the time-domain location of the first signal comprises one or more of:

a reception period of the first signal;
a time-domain start reception location of the first signal within one reception period;
a time-domain end reception location of the first signal within one reception period; or
a first duration of the first signal within one reception period; and
the frequency-domain location of the first signal comprises one or more of:

a reception period of the first signal;
a frequency-domain start reception location of the first signal within one reception period;
a frequency-domain end reception location of the first signal within one reception period; or
a frequency-domain first bandwidth of the first signal within one reception period.

57. The network device of claim 52, wherein the second configuration information comprises one of more of:

a reference time-domain offset, used to represent a time-domain offset between a resource location corresponding to a reference point and a resource location for a second device to receive a second signal, wherein the resource location corresponding to the reference point is a resource location for a first device to receive a first one of first signals or a resource location for a first device to receive a last one of first signals;
first search space configuration information, used to configure a first period for receiving a second signal, a start reception location offset and a second duration within a single first period, and a type of the second signal;
second search space configuration information, used to configure a second period for receiving a second signal, a start reception location offset and a third duration within a single second period, and a type of the second signal;
reception window configuration information, used to configure any or a combination of a start moment of a reception window, a duration of a reception window, or an end moment of a reception window, wherein the reception window is used to receive a second signal; or
a count or a maximum count of receptions of the second signal.

58. The network device of claim 57, wherein the duration of the reception window is multiple unit durations determined in a unit of a system frame, a slot, a symbol, or a paging cycle.

59. The network device of any of claims 52 to 58, wherein a type of the first configuration information comprises one or more of: cell-specific configuration information, UE-specific configuration information, or UE group-specific configuration information; and a type of the second configuration information comprises one or more of: cell-specific configuration information, UE-specific configuration information, or UE group-specific configuration information; wherein the cell-specific configuration information, the UE-specific configuration information, and the UE group-specific configuration information are carried in a radio resource control (RRC) signaling, a dynamic signaling, or a broadcast signaling.

60. The network device of claim 59, wherein the operations further comprise:

sending a dynamic signaling to a first device and/or a second device;
wherein the dynamic signaling is used to activate the first configuration information and/or the second configuration information, or the dynamic signaling is used to deactivate the first configuration information and/or the second configuration information.

61. The network device of claim 60, wherein the operations further comprise:

determining, based on the version information of the communication standard that the second device supports comprised in the reception capability information, third configuration information, wherein the third configuration information is used to configure a type of a second signal that the second device preferentially receives, and the type of the second signal comprises a paging early indication or a paging occasion; and
sending the third configuration information to the first device and/or the second device.

62. The network device of claim 61, wherein the third configuration information comprises one or more of:

paging early indication configuration information, used to indicate the type of the second signal that the second device preferentially receives; or
a skip parameter, used to indicate whether to skip a paging early indication occasion, and/or used to indicate the type of the second signal that the second device preferentially receives.

**63.** An apparatus for determining low power access or transmission, comprising:

a first determining module, used for determining, based on first configuration information sent from a network device, a resource location for a first device to receive a first signal, wherein the first signal is used to instruct the first device to wake up a second device; and
a second determining module, used for determining, based on second configuration information sent from the network device and the resource location for the first device to receive the first signal, a resource location for the second device to receive a second signal, wherein the second signal is used for the second device, after being woken up, to access the network device, or to perform a signal transmission or a data transmission with the network device.

**64.** An apparatus for determining low power access or transmission, comprising:

a configuration determining module, used for determining, based on obtained reception capability information or a service requirement, first configuration information and/or second configuration information;
wherein the reception capability information comprises one or more of:

a type of a receiver of a first device;
a sensitivity of a receiver of a first device;
a transition delay of a second device from an ultra-deep sleep state to an active state; or
version information of a communication standard that a second device supports; and
the service requirement comprises one or more of: a paging requirement, a data transmission requirement, or a signal transmission requirement.

**65.** A computer readable storage medium storing a computer program, wherein the computer program is used for causing a computer to perform the method of any of claims 1 to 20, or to perform the method of any of claims 21 to 31.

Determine, based on first configuration information sent from a network device, a resource location for a first device to receive a first signal ⟿ 101

Determine, based on second configuration information sent from the network device and the resource location for the first device to receive the first signal, a resource location for the second device to receive a second signal ⟿ 102

FIG. 1

Start

Determine, based on obtained reception capability information or a service requirement, first configuration information and/or second configuration information ⟿ 201

FIG. 2

First reception window

◄ Period of receiving second signal ►◄ Period of receiving second signal ►

| Resource location for receiving first signal | Resource location 1 for receiving second signal | Resource location 2 for receiving second signal | Resource location 3 for receiving second signal | Resource location 1 for receiving second signal | Resource location 2 for receiving second signal | Resource location 3 for receiving second signal |

◄ Time-domain offset ►

FIG. 3

| ← T=32,Ns=1,N=T/4 → | | | | ← T=32,Ns=1,N=T/4 → | | | |
|---|---|---|---|---|---|---|---|
| Paging frame #0 | Paging frame #1 | Paging frame #2 | Paging frame #3 | Paging frame #0 | Paging frame #1 | Paging frame #2 | Paging frame #3 |
| Resource location 1 for receiving second signal | Resource location 2 for receiving second signal | Resource location 3 for receiving second signal | Resource location 4 for receiving second signal | Resource location 1 for receiving second signal | Resource location 2 for receiving second signal | Resource location 3 for receiving second signal | Resource location 4 for receiving second signal |

Resource location for receiving first signal ← Trasmission time + synchronization time → Resource location for finally receiving target second signal

FIG. 4

Resource location for receiving second signal, where 1 first signal is associated with 3 paging cycles

| ← T=32 → | | Resource location 2 for receiving second signal | Resource location 3 for receiving second signal | Resource location 4 for receiving second signal | Resource location 5 for receiving second signal |
|---|---|---|---|---|---|
| Resource location 1 for receiving second signal | Resource location for receiving first signal | | | | ...... |

time-domain offset

FIG. 5

FIG. 6

FIG. 7

FIG. 8

FIG. 9

## INTERNATIONAL SEARCH REPORT

| International application No. |
|---|
| **PCT/CN2024/103388** |

### A. CLASSIFICATION OF SUBJECT MATTER

H04W52/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNKI, VCN, DWPI, ENTXT, 3GPP: 低功耗, 唤醒信号, 唤醒, 配置, 资源, 时域资源, 频域资源, 资源位置, 起始, 终止, 偏移量, 寻呼, 接入, 传输, 窗口, 周期, low power, WUS, LP-WUS, wake up, resource, offset, paging

### C. DOCUMENTS CONSIDERED TO BE RELEVANT

| Category* | Citation of document, with indication, where appropriate, of the relevant passages | Relevant to claim No. |
|---|---|---|
| X | CN 116390252 A (GUANGDONG OPPO MOBILE COMMUNICATIONS CO., LTD.) 04 July 2023 (2023-07-04)<br>description, paragraphs 0064-0206 | 1-5, 12, 15-17, 21-36, 43, 46-48, 52-65 |
| A | CN 115134914 A (HUAWEI TECHNOLOGIES CO., LTD.) 30 September 2022 (2022-09-30)<br>entire document | 1-65 |
| A | WO 2023284840 A1 (SPREADTRUM SEMICONDUCTOR (NANJING) CO., LTD.) 19 January 2023 (2023-01-19)<br>entire document | 1-65 |
| A | CN 114765518 A (DATANG MOBILE COMMUNICATIONS EQUIPMENT CO., LTD.) 19 July 2022 (2022-07-19)<br>entire document | 1-65 |
| A | MEDIATEK INC. "R2-1805101, Miscellaneous Issues of NB-IOT Wake Up Signal"<br>*3GPP TSG-RAN WG2 Meeting #101bis*, 20 April 2018 (2018-04-20),<br>entire document | 1-65 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **27 September 2024** | **10 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 761 379 A1

**INTERNATIONAL SEARCH REPORT**
Information on patent family members

International application No.

**PCT/CN2024/103388**

| Patent document cited in search report | | | Publication date (day/month/year) | Patent family member(s) | | | Publication date (day/month/year) |
|---|---|---|---|---|---|---|---|
| CN | 116390252 | A | 04 July 2023 | WO | 2022061493 | A1 | 31 March 2022 |
| | | | | CN | 115699924 | A | 03 February 2023 |
| | | | | EP | 4156807 | A1 | 29 March 2023 |
| | | | | US | 2023117840 | A1 | 20 April 2023 |
| CN | 115134914 | A | 30 September 2022 | | None | | |
| WO | 2023284840 | A1 | 19 January 2023 | CN | 115701196 | A | 07 February 2023 |
| CN | 114765518 | A | 19 July 2022 | WO | 2022152068 | A1 | 21 July 2022 |
| | | | | EP | 4280515 | A1 | 22 November 2023 |
| | | | | US | 2024089053 | A1 | 14 March 2024 |

Form PCT/ISA/210 (patent family annex) (July 2022)

**REFERENCES CITED IN THE DESCRIPTION**

**Patent documents cited in the description**

- CN 202311014882